# FASCICULE DE BREVET EUROPEEN

(11) **EP 1 280 376 B1**
(45) Date de publication et mention de la délivrance du brevet: **09.05.2007**
(21) Numéro de dépôt: 02291907.0
(22) Date de dépôt: 26.07.2002
(51) Int. Cl.: H04Q 11/04

(54) **Procédé de gestion de tâches pour un automate de routage d'un commutateur de paquets faisant partie d'un réseau sécurisé de transmission à commutation par paquets**
Taskverwaltungsverfahren für einen Router einer Paketvermittlungsstelle, die Teil eines gesicherten und Paketvermittelten Netzes ist
Task management method for a routing packet switching device being part of a secure packet switching transmission network

(30) Priorité: 27.07.2001 FR 0110121
(43) Date de publication de la demande: 29.01.2003
(73) Titulaire: Thales, 75008 Paris (FR)
(72) Inventeur: Loge, Alain, Thales Intellectual Property, 94117 Arcueil Cedex (FR); Pitot, Christian, Thales Intellectual Property, 94117 Arcueil Cedex (FR)
(74) Mandataire: Guérin, Michel

(56) Documents cités:
- EP-A- 0 472 408
- US-A- 5 889 778

## Description

La présente invention est relative aux réseaux de transmission à commutation par paquets destinés à véhiculer des informations critiques pour la sécurité avec des exigences particulières en termes de garantie et de délai d'acheminement. De tels réseaux de transmission sécuritaires ont de nombreux domaines possibles d'application dont l'interconnexion des équipements de bord d'un aéronef pour l'échange de consignes et d'informations critiques.

Un réseau de transmission à commutation par paquets est généralement désigné par réseau ATM ou Ethernet commuté, le sigle ATM provenant de l'anglo-saxon "Asynchronous Transfert Mode". Il est constitué d'un ensemble de commutateurs ou noeuds d'interconnexion, réunis par des liaisons de transmission, câblées ou non, constituant un maillage de l'espace où sont réparties les entités ayant à communiquer entre elles.

Pour être transmise sur un réseau de transmission à commutation par paquets, une information doit subir deux mises en forme successives : une mise en forme numérique et une mise en forme analogique.

La mise en forme numérique a pour but de rendre l'information à transmettre manipulable par les commutateurs de paquets. Elle aboutit, après une numérisation de l'information à transmettre, à la constitution de paquets de données binaires ou datagrammes respectant un certain format, avec un ou plusieurs champs de données binaires de message et un ou plusieurs champs de données binaires de service renfermant diverses consignes utiles au routage au sein du réseau dont des identifiants des entités destinatrices des paquets.

La mise en forme analogique intéresse les paquets ou datagrammes résultant de la mise en forme numérique à qui elle confère la forme d'un signal de transmission électrique ou optique adapté aux caractéristiques physiques des liaisons de transmission interconnectant les commutateurs du réseau entre eux et avec les entités communiquantes.

Les réseaux de transmission par paquets se différencient principalement entre eux par l'utilisation de paquets de taille variable (64 à 1518 octets) pour les réseaux Ethernet et par l'utilisation de paquets de taille fixe pour les réseaux ATM. Dans ce qui suit, on considère que la taille des paquets est quelconque ce qui permet de rester général.

Un commutateur de réseau effectue principalement :
- une détection et une démodulation, au niveau de chacun de ses ports d'entrée-sortie, des signaux de transmission lui parvenant par les liaisons de transmission auxquelles il est directement raccordé afin de redonner aux informations lui parvenant la forme de datagrammes,
- une mémorisation temporaire, dans une mémoire tampon, des trafics de datagrammes reçus par tous ses ports d'entrée-sortie en attente de l'exécution des opérations de routage vers un ou plusieurs ports de sortie du commutateur,
- une analyse des données binaires de service de chaque datagramme pour en déduire un profil de diffusion déterminant le ou les ports de sortie vers lesquels le datagramme considéré doit être aiguillé,
- l'exécution, dès que possible, du profil de diffusion consistant en une récupération, dans la mémoire tampon, du datagramme concerné et sa présentation sur les ports de sortie voulus, et
- la remodulation des datagrammes au niveau des ports de sortie pour leur donner la forme d'un signal de transmission adapté à leur acheminement sur les liaisons de transmission connectées aux ports de sortie.

Pour remplir ces différentes tâches, un commutateur de paquets comporte en général, en périphérie, au niveau de chacun de ses ports d'entrée-sortie, un circuit modulateur-démodulateur individuel dit circuit MAC (Medium Access Control) assurant l'interface, dans les deux sens, entre les datagrammes circulant en interne, et les signaux de transmission qui leur correspondent en externe, sur les liaisons physiques d'interconnexion du réseau directement raccordées au port d'entrée-sortie considéré, ainsi qu'un automate logique de gestion de file d'attente d'émission résolvant les conflits entre les demandes de réémission de datagrammes trop rapprochées pour pouvoir être satisfaites dans l'instant, et, en central, une mémoire tampon constituée d'une mémoire vive à accès multiple stockant les datagrammes reçus par le commutateur de paquets le temps de leur routage, un séquenceur central fournissant l'adressage de la mémoire tampon pour la faire fonctionner à la façon de plusieurs bancs de mémoire circulante, un banc par port entrant, et un automate central de routage déterminant un profil de diffusion, c'est-à-dire la liste des ports d'entrée-sortie du commutateur de réseau par lesquels doit être réémis un datagramme, établie en fonction de la localisation du commutateur de paquets concerné au sein du réseau de transmission à commutation par paquets et des données de service de ce datagramme, essentiellement, les identités des entités destinatrices.

La mise au premier plan de l'aspect sécuritaire conduit à adopter, dans un réseau de transmission à commutation par paquets, des mesures tendant à garantir au mieux, l'acheminement d'une information en un délai maximum, même en cas d'un fonctionnement dégradé, en éliminant autant que faire se peut, les risques de congestion du réseau. Elles interviennent à deux niveaux, celui des paquets ou datagrammes et celui des chemins virtuels suivis par les datagrammes au sein du réseau, un chemin virtuel étant associé à un flux particulier d'informations ayant les mêmes entités expéditrices et destinataires et étant défini par les états instantanés pris par les commutateurs du réseau lorsqu'ils sont traversés par les datagrammes appartenant à ce flux d'informations.

Les mesures sécuritaires anticongestion du réseau prises au niveau des datagrammes consistent à vérifier l'intégrité et la fraîcheur des datagrammes au cours de leurs séjours au sein des commutateurs de paquets du réseau, tous les commutateurs de paquets ou seulement certains d'entre eux, et à rejeter les datagrammes non intègres ou ayant séjourné trop longtemps dans un commutateur de paquets, pour ne pas encombrer inutilement les liaisons de transmission du réseau par des datagrammes qui sont devenus inexploitables par les entités destinatrices.

La vérification d'intégrité d'un datagramme se base sur la conformité du datagramme tel qu'il est perçu au niveau d'un commutateur de paquets du réseau, avec un signalement figurant dans ses données binaires de service constitué d'informations sur le type du paquet ou d'informations de redondance fournies par un code de correction d'erreur.
La vérification de fraîcheur d'un datagramme au niveau d'un commutateur de paquets se base sur la comparaison du temps courant avec la date de réception du datagramme par le commutateur de paquets considéré. Lorsqu'un datagramme séjourne trop longtemps dans un commutateur de paquets avant d'être réexpédié, le commutateur de paquets risque d'avoir ses possibilités de mémorisation dépassées et de faire des confusions de datagrammes. Il faut donc éliminer toute référence à un datagramme dès que son séjour dans un commutateur de paquets tend à se prolonger anormalement.

Les mesures sécuritaires anticongestion du réseau prises au niveau d'un chemin virtuel sont de deux ordres. Elles consistent d'une part, à vérifier qu'un datagramme, lors de son passage à travers un commutateur de paquets, suit bien un chemin virtuel autorisé, faute de quoi il est rejeté pour ne pas encombrer inutilement les liaisons de transmission par des paquets qui ne seront pas correctement exploités par les entités destinatrices car mal aiguillés et, d'autre part, à maintenir, aux niveaux des différents commutateurs de paquets, les débits des chemins virtuels en dessous des maxima autorisés, en procédant au besoin à des délestages par élimination autoritaire des datagrammes en surnombre, cela, pour confiner un défaut de fonctionnement d'une entité expéditrice ou d'un commutateur de paquets, aux seuls chemins virtuels qui lui sont affectés. Voir par exemple la publication EP 0 472 408 qui propose une solution permettant de controler le flux de paquets transmits par chemin virtuel.
La vérification de l'adéquation d'un datagramme et du chemin virtuel qu'il emprunte au niveau d'un commutateur de paquets se base sur la vérification de la compatibilité du port par lequel est reçu le datagramme au niveau d'un commutateur de paquets avec le chemin virtuel qui a été assigné à l'origine au datagramme et qui se déduit de données binaires de service contenues dans le datagramme, repérant aux entités destinatrices du datagramme et éventuellement d'autres données binaires de service repérant l'entité expéditrice ou le type du datagramme.

Le maintien du débit de données d'un chemin virtuel en dessous des maxima autorisés aux niveaux des différents commutateurs de paquets qu'il traverse, consiste en une surveillance de son débit réel aux niveaux de ces commutateurs de paquets, par un pointage des datagrammes qu'il achemine, pointage tenant compte du fait que les datagrammes souvent émis à une cadence régulière par une entité expéditrice, peuvent être affectés d'une gigue plus ou moins importante en raison de l'existence possible de files d'attente au niveau des commutateurs de paquets, et en une limitation autoritaire du débit réel en deçà du débit maximum par élimination des datagrammes en surnombre.
Ces mesures visent à éliminer les risques de perte ou de retard d'acheminement des informations par suite de congestion du réseau. D'autres mesures ont pour but de faire en sorte que les informations ayant, malgré les précautions prises, perdu leur intégrité en cours d'acheminement soient rejetées pour ne pas encombrer des liaisons de transmission et accaparer inutilement du temps de traitement dans les commutateurs de paquets.

Comme il est intéressant de réduire au maximum le nombre de datagrammes stockés dans la mémoire tampon centrale d'un commutateur de paquets, il est avantageux d'effectuer la vérification d'intégrité d'un datagramme au niveau du port d'entrée par lequel il parvient au commutateur de paquets considéré. En effet, cela permet de l'éliminer avant sa présentation à la mémoire tampon centrale en cas d'un constat de manque d'intégrité. La fonction de vérification de l'intégrité de chaque paquet reçu est alors confiée aux circuits MAC dont la structure est adaptée en ce sens.

Pour toutes les autres mesures sécuritaires anticongestion du réseau, il est avantageux, pour des raisons de coût, de confier leurs mises en oeuvre à l'automate central de routage. Cependant, cela augmente de façon importante la charge de travail de l'automate central de routage et implique une augmentation conséquente de la puissance de calcul de celui-ci.

La présente invention a pour but de faciliter la mise en oeuvre de mesures sécuritaires anticongestion par un automate central chargé du routage au sein d'un commutateur de paquets.
Elle a également pour but une exécution à moindre coût, au niveau des commutateurs de paquets d'un réseau de transmission par paquets, de mesures sécuritaires anticongestion renforçant la sécurité du réseau.

Elle a pour objet un procédé de gestion de tâches pour un automate de routage d'un commutateur de paquets faisant partie d'un réseau sécurisé de transmission à commutation par paquets et comportant plusieurs ports d'entrée et plusieurs ports de sortie servant d'accès à des trafics de données entrants et sortants empruntant des liaisons physiques de transmission raccordées extérieurement au commutateur de paquets, sous forme de signaux de transmission renfermant des datagrammes, lesdits datagrammes renfermant des données binaires de message et des données binaires de service contenant des consignes de routages permettant de définir pour chaque datagramme un chemin dit "virtuel" à suivre sein du réseau de transmission par paquets pour parvenir à destination. Ce procédé de gestion de tâche est remarquable en ce qu'il consiste, d'une part, à pourvoir ledit automate de routage d'une table, stockée en mémoire vive, de descripteurs locaux des chemins virtuels empruntant le commutateur de paquets considéré, un descripteur local affecté à un chemin virtuel donné contenant, un profil de diffusion répertoriant les ports de sortie du commutateur de paquets considéré utilisés par le chemin virtuel concerné, un profil de réception répertoriant les ports d'entrée du commutateur de paquets utilisables par le chemin virtuel concerné, des informations sur des contraintes de forme et de débit imposées aux datagrammes empruntant le chemin virtuel concerné et des informations de chronologie permettant de déterminer la date au plus tôt pour une arrivée licite du prochain datagramme empruntant le chemin virtuel concerné, et, d'autre part, à partager le temps de traitement dudit automate de routage en une suite répétitive de fentes temporelles dont certaines sont réparties entre les différents ports d'entrée, chacune étant affectée individuellement à un port d'entrée particulier et réservée à des opérations faisant partie du traitement de routage des datagrammes reçus par son port d'entrée d'affectation, ce traitement consistant, pour un datagramme, à :
- lire, dans la mémoire vive, le descripteur local de chemin virtuel affecté au datagramme reçu, repéré dans la table des descripteurs locaux au moyen de données de service tirées du datagramme reçu,
- effectuer sur le datagramme, des vérifications sécuritaires anticongestion prenant en compte sa date de réception par le commutateur de paquets, l'identitée du port d'entrée lui ayant servi pour accéder au commutateur de paquets et les informations contenues dans le descripteur local lu,
- soit, lorsque l'une des vérifications précédentes est négative, rejeter le datagramme en cours de traitement,
- soit, lorsque toutes les vérifications précédentes sont positives, mettre à jour les informations du descripteur local lu relatives à la date de réception du datagramme en cours de traitement, au crédit d'avance de phase pour le prochain datagramme empruntant le chemin virtuel concerné et proposer le datagramme en cours de traitement aux ports de sortie répertoriés dans le profil de diffusion du descripteur local lu, en vue de la réémission de ce datagramme par ces ports de sortie.

Avantageusement, les vérifications sécuritaires anticongestion consistent à :
- vérifier l'appartenance du port d'entrée ayant servi au datagramme en cours de traitement pour accéder au commutateur de paquets, au profil de réception du descripteur local lu,
- vérifier que l'ancienneté de la date de réception du datagramme en cours de traitement par rapport à la date courante ne dépasse pas un certain seuil, et
- vérifier que la date de réception du datagramme en cours de traitement entre dans les limites permises par le débit maximum autorisé pour le chemin virtuel correspondant au descripteur local lu, cela en tenant compte de la valeur de son crédit d'avance de phase.

Avantageusement, les descripteurs locaux de chemins virtuels ont tous la même longueur.

Avantageusement, les descripteurs locaux de chemins virtuels sont organisés en au moins un mot protégé par un code de détection et de correction d'erreurs permettant de détecter et corriger les erreurs simples, et détecter les erreurs multiples, des fentes temporelles étant réservées dans le temps de traitement de l'automate de routage pour des tâches de servitudes dont une vérification périodique de l'intégrité des éléments de la table des descripteurs locaux, leur correction éventuelle ou leur invalidation en cas de dépassement des possibilités de correction, l'invalidation d'un descripteur local consistant à lui donner une valeur spécifique représentative de sa non-validité.

Avantageusement, la tâche de servitude consacrée à la vérification de l'intégrité des descripteurs locaux inclut la détection des descripteurs locaux invalidés et leurs réécritures à partir d'une mémoire d'archivage située dans le commutateur de paquets considéré ou à un autre endroit du réseau de transmission à commutation par paquets.

Avantageusement, la valeur spécifique représentative de non-validité pour un descripteur local de chemin virtuel est localisée au niveau du profil de diffusion et correspond à un profil de diffusion inusité tel qu'un profil de diffusion vide.

Avantageusement, parmi les tâches de servitudes pour lesquelles des fentes temporelles sont réservées dans le temps de traitement de l'automate de routage figure l'initialisation de la table des descripteurs locaux à la mise en route du commutateur de paquets, cette initialisation se faisant par une inscription en mémoire vive à partir de données tirées d'une mémoire d'archivage localisée ou non dans le commutateur de paquets.

Avantageusement, parmi les tâches de servitudes pour lesquelles des fentes temporelles sont réservées dans le temps de traitement de l'automate de routage, figure, en cas de l'utilisation d'une échelle de temps sur un horizon limité, une vérification de la commensurabilité, par rapport au temps courant, des dates figurant dans les descripteurs locaux aboutissant, à une signalisation explicite des dates se révélant non-commensurables.

Avantageusement, les profils de diffusion figurant dans les descripteurs locaux de chemin virtuel sont figés à la conception du réseau de transmission à commutation par paquets à l'exception d'un bit réservé à un éventuel port de sortie affecté à de la maintenance dont la valeur peut être modifiée par l'automate de routage.

Avantageusement, un descripteur local de chemin virtuel se présente sous un format standard constitué de quatre mots binaires successifs : un mot de variables et trois mots de constantes :
- le mot de variables essentiellement consacré à la datation étant réécrit à l'apparition de chaque nouveau datagramme affecté au chemin virtuel concerné et renfermant principalement des variables relatives à la date de réception du dernier datagramme parvenu au commutateur de paquet considéré par le même chemin virtuel concerné et au crédit d'avance de phase dont bénéficie le nouveau datagramme apparu, ces deux informations pouvant être éventuellement, regroupées sous la forme d'une variable unique exprimant la date au plus tôt, pour une arrivée licite du prochain datagramme,
- un premier mot de constantes relatives principalement au débit maximum et à la gigue maximale admise pour le chemin virtuel considéré au niveau du commutateur de paquets concerné et à la longueur maximale autorisée pour le datagramme,
- un deuxième mot de constantes de profil de réception répertoriant les ports d'entrée du commutateur de paquets concerné, autorisés à recevoir un datagramme affecté au chemin virtuel considéré, et
- un troisième mot de constantes de profil de diffusion répertoriant les ports de sortie du commutateur de paquets concerné devant réexpédier un datagramme affecté au chemin virtuel considéré.

Avantageusement, un descripteur local de chemin virtuel se présente soit sous un format standard, soit sous un format spécial :
le format standard qui est constitué de quatre mots binaires successifs : un mot de variables et trois mots de constantes, le mot de variables essentiellement consacré à la datation étant réécrit à l'apparition de chaque nouveau datagramme affecté au chemin virtuel concerné et renfermant principalement des variables relatives à la date de réception du dernier datagramme parvenu au commutateur de paquet considéré par le même chemin virtuel concerné et au crédit d'avance de phase dont bénéficie le nouveau datagramme apparu, un premier mot de constantes de spécification relatives principalement au débit maximum et à la gigue maximale admis pour le chemin virtuel considéré au niveau du commutateur de paquets concerné et à la longueur maximale autorisée pour le datagramme, un deuxième mot invariant de constantes de profil de réception répertoriant les ports d'entrée du commutateur de paquets concerné, autorisés à recevoir un datagramme affecté au chemin virtuel considéré, et un troisième mot de constantes de profil de diffusion répertoriant les ports de sortie du commutateur de paquets concerné devant réexpédier un datagramme affecté au chemin virtuel considéré, et
le format spécial qui se distingue du format standard par le fait que le deuxième mot de profil de réception comporte une définition réduite à un seul port du profil de réception et, à la place laissée libre par la définition réduite du profil de réception, un index d'adressage permettant de pointer un mot de variables de datation commun à plusieurs chemins virtuels.

Avantageusement, dans les deux formats de descripteur local de chemin virtuel : le format standard et le format spécial, tous les mots sont protégés par un code de détection et de correction d'erreur individuelle.

Avantageusement, dans les deux formats de descripteur local de chemin virtuel : le format standard et le format spécial, tous les mots de constantes sont protégés individuellement contre les erreurs, en premier lieu par un code de Hamming combinant leur adresse en mémoire vive et leur contenu, et en deuxième lieu par un code de détection et de correction d'erreur.

Avantageusement, dans les deux formats de descripteur local de chemin virtuel : le format standard et le format spécial, le mot de constantes de spécification renferme un identificateur du type de format concerné.

Avantageusement, dans les deux formats de descripteur local de chemin virtuel : le format standard et le format spécial, le mot de variables de datation renferme un champ de variable destiné à la comptabilisation des situations de rejet.

Avantageusement, dans les deux formats de descripteur local de chemin virtuel : le format standard et le format spécial, le mot de variables de datation comporte un drapeau permettant d'ajouter ou non au profil de diffusion défini par le mot de constantes de profil de diffusion, un port de sortie affecté aux opérations de maintenance.

Avantageusement, dans les deux formats de descripteur local : le format standard et le format spécial, le mot de constantes de spécification renferme un champ consacré à une information de priorité relative entre les chemins virtuels d'une table de descripteurs locaux.

Avantageusement, la valeur spécifique représentative de non-validité pour un descripteur local de chemin virtuel au format standard ou au format spécial est obtenue par une mise à un de leurs trois mots de constantes.

Avantageusement, en présence d'une table de descripteurs locaux de chemins virtuels répondant aux formats standard et spécial, la suite répétitive de fentes temporelles allouées individuellement aux différents ports d'entrée au cours d'un cycle de traitement de l'automate de routage, comporte, pour un même port d'entrée, une fente temporelle affectée aux accès en lecture des mots de constantes du descripteur local adressé et à la l'exploitation en compte des informations qu'ils contiennent, puis une fente temporelle d'accès en lecture d'un mot de variables soit du descripteur local adressé en cas de format standard, soit, éventuellement, dans le cas du format spécial, d'un autre descripteur situé au moyen de l'index d'adressage, et d'exploitation des informations contenues dans ce mot de variables et enfin une fente temporelle de réécriture pour remise à jour, du mot de variable lu, fentes temporelles qui peuvent être entremêlées avec des fentes temporelles allouées à d'autres ports d'entrée pour permettre une exécution en multitâche des opérations élémentaires impliquées par un routage et réduire le temps global de routage de l'ensemble des datagrammes reçus.

Avantageusement, lorsque le commutateur de paquets comporte une mémoire tampon centrale balayée de manière cyclique en écriture, par un séquenceur d'adresses la faisant fonctionner à la façon d'une pluralité de mémoires circulantes, une mémoire circulante par port d'entrée affectée au trafic d'informations entrant par ce port, le séquenceur d'adresse fournit également la suite répétitive de fentes temporelles répartissant le temps de traitement de l'automate de routage entre les différents ports d'entrée du commutateur de paquets, de sorte que le cycle de balayage de la mémoire tampon et la suite répétitive des fentes temporelles de répartition du temps de traitement de l'automate de routage soient synchronisés.

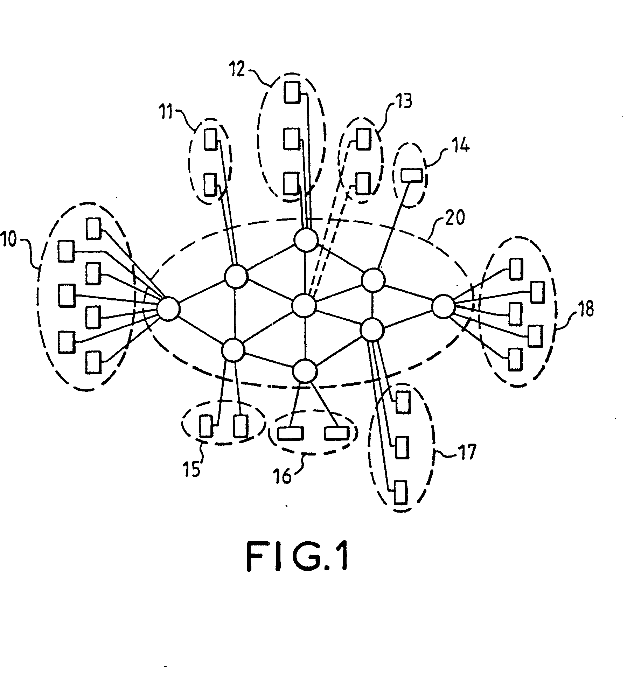

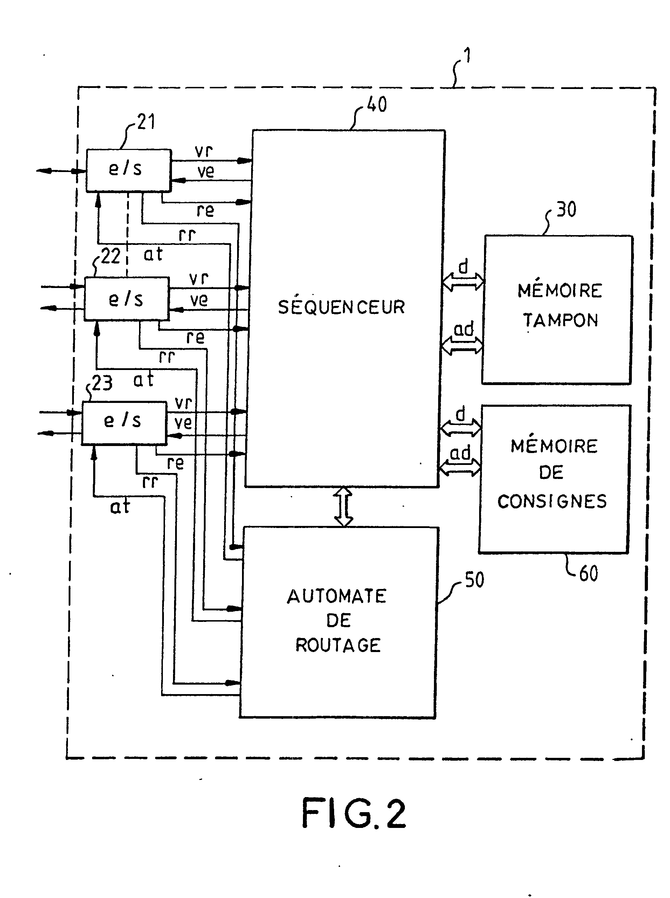

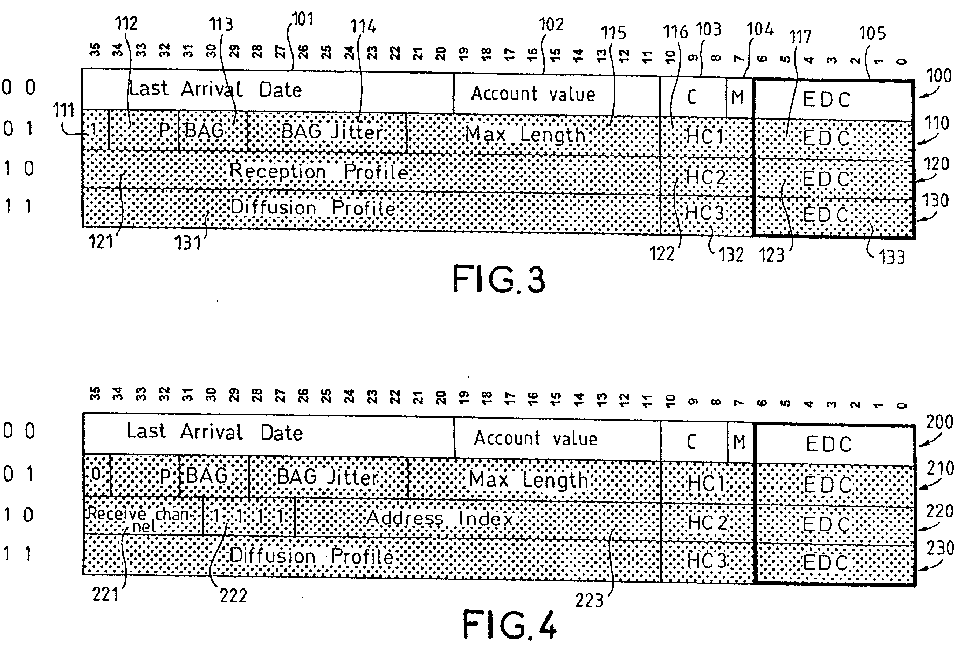

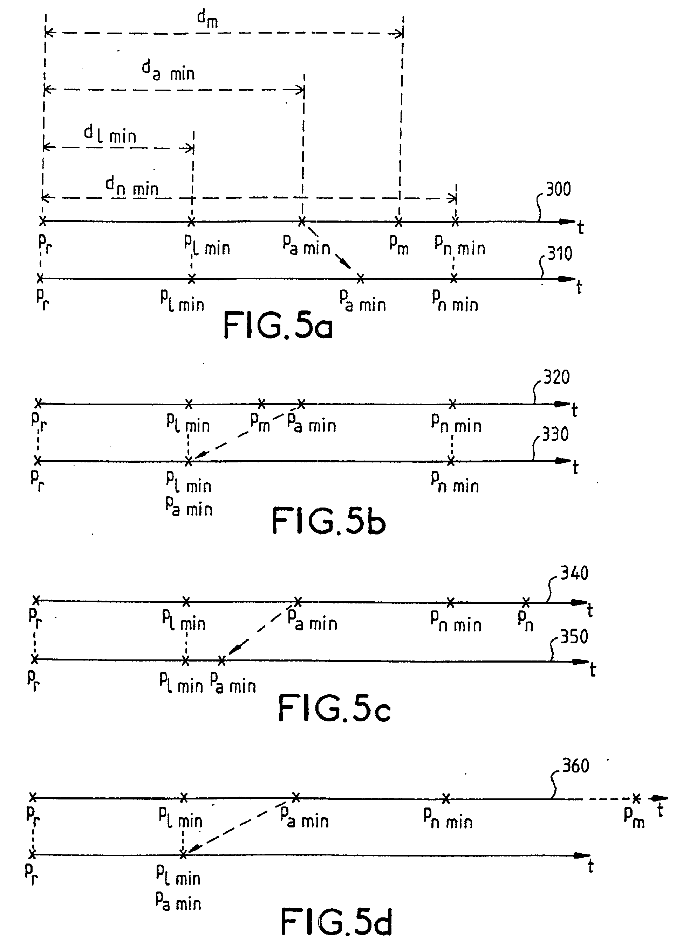

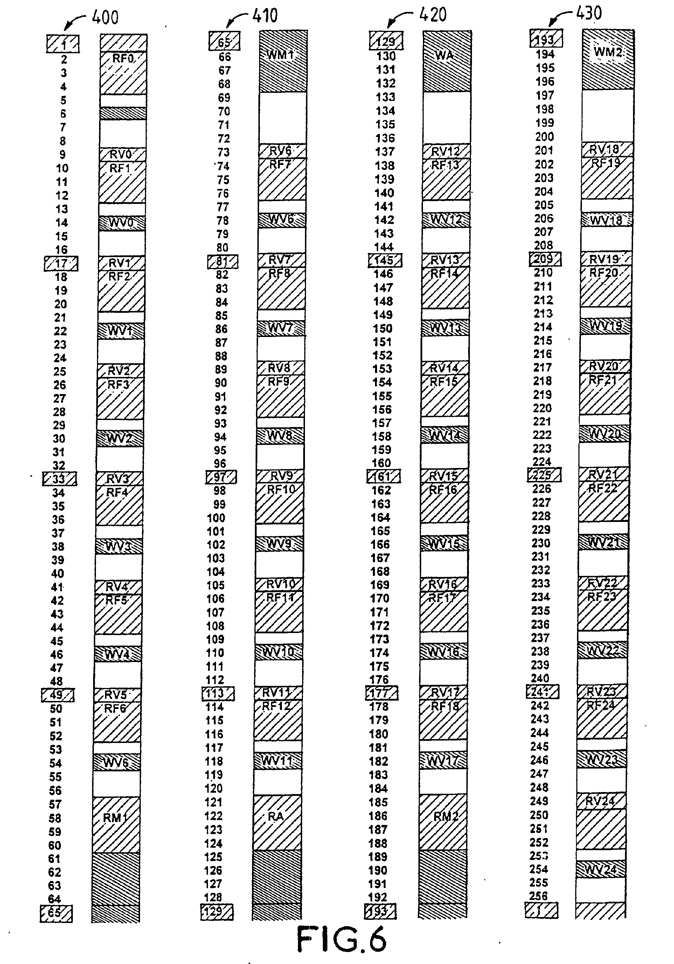

D'autres caractéristiques et avantages de l'invention ressortiront de la description ci-après d'un mode de réalisation donné à titre d'exemple. Cette description sera faite en regard du dessin dans lequel :
- une figure 1 représente un exemple de topologie de réseau de transmission par paquets,
- une figure 2 représente un exemple d'architecture de commutateur de paquets,
- des figures 3 et 4 illustrent des formats sous lesquels sont stockés des ensembles d'informations utiles au routage, ensembles désignés par descripteurs locaux de chemin virtuel,
- des figures 5a à 5d sont des diagrammes temporels illustrant le déroulement d'opérations faites pour permettre de vérifier que le débit maximum autorisé pour un chemin virtuel n'est pas dépassé, et
- une figure 6 illustre un exemple de séquencement utilisable pour gérer le fonctionnement d'un automate assurant le routage des paquets ou datagrammes au niveau d'un noeud du réseau de transmission.

La figure 1 montre différents ensembles d'équipements 10 à 18 communiquant entre eux par l'intermédiaire d'un réseau de transmission à commutation par paquets 20. Les ensembles d'équipements 10 à 18 sont d'importances inégales et géographiquement dispersés sur une zone couverte par le réseau de transmission à commutation par paquets 20. Le réseau de transmission à commutation par paquets 20 est schématisé par un maillage de noeuds d'interconnexion ou commutateurs de paquets représentés par des cercles, et de liaisons physiques de transmission repésentées par des segments de droites interconnectant les commutateurs de paquets entre eux et aux équipements. Chaque équipement représenté par un rectangle, est raccordé au réseau de transmission à commutation par paquets 20, au niveau d'un ou plusieurs commutateurs de paquets placés à proximité, par l'intermédiaire d'un terminal spécialisé non représenté et d'une ou plusieurs liaisons physiques de transmission.

Pour leur manipulation au sein d'un réseau de transmission par paquets, les messages échangés par les équipements subissent deux mises en forme successives : d'abord, une numérisation leur donnant l'aspect d'une suite de données binaires suivie d'un empaquetage de la suite de données binaires obtenue, sous forme d'un ou plusieurs paquets ou datagrammes successifs adaptés aux traitements de routage opérés au sein des commutateurs de paquets, puis, une mise en forme des datagrammes en signaux de transmission électriques ou optiques pour leurs acheminements par les liaisons physiques d'interconnexion.

Les datagrammes sont constitués d'une suite de données binaires de message précédée d'une suite de données binaires de service renfermant des informations utiles à leur routage au sein des commutateurs de paquets traversés. Ils respectent un format ou protocole particulier adapté aux caractéristiques des circuits logiques combinatoires et/ou séquentiels effectuant les routages au sein des commutateurs de paquets.

Les signaux électriques ou optiques utilisés pour acheminer les datagrammes sur les liaisons physiques de transmission d'interconnexion reliant les commutateurs de paquets entre eux et aux équipements, sont adaptés aux caractéristiques physiques des liaisons utilisées.

Aux extrémités des liaisons de transmission, que ce soit au niveau des terminaux raccordant les équipements au réseau ou au niveau des ports d'entrée-sortie des commutateurs de paquets, on trouve des circuits de démodulation et de modulation assurant la transformation d'un signal de transmission reçu par l'intermédiaire d'une liaison physique en son datagramme correspondant et, inversement, la transformation d'un datagramme manipulé au niveau d'un terminal d'équipement ou d'un commutateur de paquets en un signal de transmission adapté aux liaisons physiques de transmission.

Un datagramme reçu et démodulé au niveau d'un port d'entrée-sortie d'un commutateur de paquets doit être aiguillé, au sein de ce commutateur de paquets, vers un ou plusieurs autres ports d'entrée-sortie pour être réémis sur une ou plusieurs autres liaisons physiques de transmission directement raccordées à ce commutateur de paquets en vue de le rapprocher de sa ou ses destinations finales. Cette opération, dite de routage, est la tâche principale assumée par un commutateur de paquets. Son exécution peut prendre un temps variable fonction des encombrements des ports de sortie de réémission car plusieurs datagrammes peuvent être reçus simultanément par un même commutateur de paquets sur plusieurs de ses ports d'entrée et devoir être aiguillés, pour leurs réémissions, sur un même port de sortie, ce qui peut provoquer un embouteillage au niveau du port de sortie imposant une mémorisation temporaire des trafics de données entrants et une gestion de file d'attente au niveau des ports de sortie pour éviter une perte de datagrammes.

La figure 2 illustre une architecture possible pour un commutateur de paquets 1. Celui-ci communique, par des ports d'entrée-sortie e/s 21, 22, 23 avec d'autres commutateurs de paquets ou avec des équipements raccordés à son réseau par l'intermédiaire de liaisons physiques de transmission mono ou bidirectionnelles. Sur la figure, trois ports d'entrée-sortie e/s 21, 22, 23 sont représentés mais leur nombre n'est pas limité. Ce nombre est adapté au nombre de raccordements prévus pour le commutateur de paquets considéré, un port d'entrée-sortie assurant l'interface avec une liaison physique de transmission bidirectionnelle ou avec deux liaisons physiques de transmission monodirectionnelles utilisées l'une à l'émission et l'autre à la réception.

Dans l'exemple représenté, le port d'entrée-sortie e/s 21 assure l'interface avec une liaison physique de transmission bidirectionnelle et les ports e/s d'entrée-sortie 22 et 23 l'interface avec deux liaisons physiques de transmission monodirectionnelles utilisées l'une à la réception et l'autre à l'émission. Assurer l'interface consiste à effectuer les tâches de modulation et de démodulation, et une tâche de gestion de liste de paquets en attente de réémission. La tâche de modulation consiste à mettre les paquets à réémettre sous la forme d'un signal de transmission aux caractéristiques physiques adaptées à celles de la liaison de transmission utilisée à l'émission aboutissant sur le port d'entrée-sortie concerné. La tâche de démodulation consiste à extraire les paquets contenus dans les signaux de transmission reçus sur la liaison physique de transmission utilisée à la réception et aboutissant au port d'entrée-sortie e/s concerné. La tâche de gestion de liste d'attente consiste à mettre en file, les uns derrière les autres les paquets à réémettre lorsqu'ils parviennent à une cadence trop rapide eu égard au débit de la liaison physique de transmission utilisée à la réémission.

Un port d'entrée-sortie e/s est relié aux circuits internes de traitement du commutateur de paquets qu'il équipe, par une voie de réception de données, une voie d'émission de données et plusieurs ports de contrôle. Par la voie de réception de données vr, il met à la disposition de son commutateur de paquets, le trafic entrant de données binaires parvenant au commutateur de paquets par la liaison physique de transmission qu'il contrôle. La voie d'émission de données ve lui permet de recevoir les datagrammes qu'il doit réémettre et qui proviennent d'autres circuits internes du commutateur de paquets. Les ports de contrôle dont un port de requête de routage rr, un port d'attribution de paquets at et un port de requête de paquets à émettre re servent aux gestions de la réception des paquets, de la réémission des paquets et de la file d'attente des paquets à réémettre.

Outre ses ports d'entrée-sortie e/s 21, 22, 23, le commutateur de paquets comporte : une mémoire tampon 30 utilisée pour stocker, sur une certaine durée, les trafics de données entrants, un séquenceur 40 gérant l'adressage de la mémoire tampon 30 et les accès à cette dernière, un automate de routage 50 et une mémoire de consignes 60 dans laquelle l'automate de routage 50 puise des directives.

La mémoire tampon 30 est un rassemblement de mémoires circulantes dont les présences sont imposées par l'obligation de gérer des listes d'attente au niveau des ports e/s d'entrée-sortie pour la réémission des paquets et, dans une moindre mesure, par les temps de traitement des requêtes de routage. Chaque mémoire circulante est réservée à l'écriture à un trafic de données entrant déterminé donc à un port e/s d'entrée-sortie déterminé, mais peut être lue indifféremment par tous les ports e/s d'entrée-sortie.

La mémoire tampon 30 est une mémoire vive constituée d'un ensemble de bancs de registres de longueurs égales à celle des mots binaires fournis par les ports d'entrée-sortie 21, 22, 23, longueur qui est choisie en fonction de la capacité de traitement en une opération, des circuits numériques utilisés dans le commutateur de paquets. Cet ensemble de bancs de registres est partagé en autant de groupes séparés qu'il y a de ports d'entrée-sortie, chaque groupe étant affecté en écriture à un port d'entrée-sortie particulier balayé en écriture de manière cyclique, à une cadence suffisante pour supporter le débit binaire du trafic de données auquel il est affecté et lu à la demande par l'ensemble des ports d'entrée-sortie.

Le séquenceur 40 assure l'adressage de la mémoire tampon 30 de manière à la faire fonctionner comme un ensemble de mémoires circulantes. Pour ce faire, il alloue à chaque port d'entrée-sortie du commutateur de paquets, une trame périodique invariante d'accès en écriture à un groupe imposé de bancs de registres de la mémoire tampon et une trame périodique d'accès en lecture à un groupe de bancs de registres laissé au choix, la trame périodique d'accès en lecture suivant le même ordre de balayage que la trame périodique utilisée en écriture mais avec un déphasage laissé au choix du port d'entrée-sortie.

L'automate de routage 50 est un circuit à logique combinatoire et/ou séquentielle, par exemple à microprocesseur, qui traite les requêtes de routage émises par les différents ports e/s d'entrée-sortie 21, 22, 23 pour en extraire les profils de routage associés à chaque datagramme en cours de réception par le commutateur de paquets et engendrer, à partir de ces profils de routage, des consignes ou profils de diffusion répertoriant les ports e/s d'entrée-sortie du commutateur de paquets devant réémettre les datagrammes.

La mémoire de consignes 60 renferme les informations nécessaires à l'automate de routage pour mener à bien sa tâche. Comme la mémoire tampon, son adressage est géré par le séquenceur 40.

Le trajet emprunté par un datagramme au sein du réseau pour parvenir de l'équipement qui l'a émis aux équipements destinataires est défini par les configurations des commutateurs de paquets aux instants où il les traverse. Ce trajet est dit chemin virtuel. II est défini a priori, lors de la conception du réseau, en fonction des localisations de l'équipement expéditeur et du ou des équipements destinataires. Dans la généralité, un chemin virtuel reliant, au sein d'un réseau de transmission à commutation par paquets, un équipement expéditeur à un ou plusieurs équipements destinataires peut avoir un trajet dont le tracé évolue lentement au cours du temps en fonction des consignes d'un organe de régulation des trafics cherchant à équilibrer les taux d'activité des différents commutateurs de paquets du réseau. Que les tracés des chemins virtuels soient ou non figés, ils peuvent être considérés comme invariants sur une échelle de temps très supérieure à celle du délai d'acheminement d'un datagramme. Cela permet d'associer localement, de manière biunivoque, au niveau d'un commutateur de paquets, à chaque chemin virtuel passant par ce commutateur de paquets, un profil de diffusion prédéfini, répertoriant tous les ports de sortie devant réémettre les datagrammes, de sorte que la tâche principale d'un automate de routage est de déterminer le chemin virtuel d'appartenance du datagramme en cours de routage à partir des données de service contenues dans ce datagramme et d'aller chercher dans une mémoire locale de consignes (60 figure 2), le profil de diffusion correspondant.

Comme l'accent est mis sur la sécurité en terme de garantie et de durée d'acheminement des informations au sein du réseau de transmission à commutation de paquets, diverses précautions sont prises au niveau du réseau lui-même et de ses commutateurs de paquets ou de certains d'entre eux, pour supprimer tout risque de saturation des chemins empruntés par les informations au travers du réseau, susceptible de provoquer la perte de datagrammes ou des retards inacceptables dans leurs transmissions.

Au niveau du réseau lui-même, les tracés des chemins virtuels sont figés en vue de rendre le réseau déterministe et de faciliter l'analyse, a priori, de son comportement en toutes circonstances sur laquelle est basée son dimensionnement qui doit tenir compte du maximum prévisible de l'activité du réseau en situation normale de fonctionnement et garantir des débits minima pour les divers chemins virtuels qui le traversent, cela indépendamment des activités des autres chemins virtuels.

Au niveau des commutateurs de paquets ou de certains d'entre eux, les datagrammes en transit voient leurs intégrités, les longueurs de leurs séjours et leur appartenance au chemin virtuel annoncé vérifiées, tous datagramme ne satisfaisant pas aux vérifications étant rejeté, tandis que les débits locaux des chemins virtuels sont surveillés et limités aux valeurs admises par un rejet autoritaire des datagrammes en surnombre.

La vérification de l'intégrité d'un datagramme transitant par un commutateur de paquets s'effectue au niveau du port d'entrée par lequel il parvient au commutateur de paquets. Cette vérification se fait, de manière générale, à l'aide d'un Code Redondant Cyclique (CRC), en comparant le résidu de ce code établi sur le datagramme en transit, avec la valeur de ce résidu établie lors de l'expédition de ce datagramme et transmise avec lui dans ses données de service.

Les autres mesures sécuritaires au niveau d'un commutateur de paquets sont mises en oeuvre par l'automate de routage qui les prend en charge en plus de sa tâche de routage. Pour faciliter cette prise en charge, on propose de stocker dans la mémoire de consigne 60, non pas une simple table des profils de diffusion associés aux chemins virtuels transitant par le commutateur de paquets mais une table de descripteurs locaux de chemins virtuels comportant en plus des profils de diffusion associés aux chemins virtuels transitant par le commutateur de paquets, des informations utiles à l'exécution de ces mesures sécuritaires. Ces descripteurs locaux de chemin virtuel peuvent avoir un format standard ou un format spécial.

Un descripteur local de chemin virtuel au format standard renferme des variables et des constantes qui particularisent, au niveau d'un commutateur de paquets, le chemin virtuel concerné, considéré individuellement, indépendamment des autres chemins virtuels transitant par le même commutateur de paquets tandis qu'un descripteur local de chemin virtuel au format spécial permet un regroupement partiel de plusieurs chemins virtuels du point de vue des mesures sécuritaires en leur associant des variables communes.

Les figures 3 et 4 donnent un exemple de ces formats de descripteurs locaux de chemin virtuel. Dans cet exemple, les descripteurs locaux de chemin virtuel sont constitués chacun de quatre mots binaires consécutifs de 36 bits dont l'adresse de base, dans la mémoire de consignes 60, identifie le chemin virtuel concerné. Les adresses de base des descripteurs locaux d'un chemin virtuel donné peuvent être les mêmes dans les mémoires de consignes des différents commutateurs de paquets, la valeur unique retenue servant d'identifiant au chemin virtuel dans tout le réseau et étant reprise dans les données de service des datagrammes pour repérer leurs chemins virtuels d'affectation. Cette identité des adresses, au niveau de tous les commutateurs de paquets, des descripteurs locaux intéressant un même chemin virtuel permet d'adopter, pour les commutateurs de paquets, une structure indépendante de leurs localisations au sein du réseau et de ne faire intervenir cette localisation qu'à un niveau de programmation.

Comme on peut le voir sur la figure 3, un descripteur local de chemin virtuel au format standard comporte un premier mot binaire 100 de trente-six bits constitué d'un champ de variables et trois mots binaires 110, 120 et 130 de trente-six bits constituant ensemble, un champ de constantes.

Le champ de variables du premier mot binaire 100, montré sur un fond blanc, renferme différentes variables dont :
- la date 101 du dernier datagramme arrivé au commutateur de paquets considéré ayant le chemin virtuel concerné comme affectation figurant dans ses données de service, cette date étant codée sur seize bits dans une première partie du champ de variables repérée par le terme anglo-saxon de "Last Arrivai Date" et servant à estimer la date d'arrivée au plus tôt du prochain datagramme affecté au chemin virtuel concerné en fonction du débit de données maximum autorisé pour le chemin virtuel concerné,
- une valeur de crédit d'avance de phase 102 donnant une mesure de la tolérance d'avance de phase admise, par rapport à la date estimée, pour la date d'arrivée du prochain datagramme affecté au chemin virtuel concerné, tolérance justifiée par la gigue admise pour le chemin virtuel concerné au niveau du commutateur de paquets considéré, cette valeur de crédit d'avance de phase étant codée sur neuf bits dans une deuxième partie du champ de variables repérée par le terme anglo-saxon "Account Value",
   (Les champs 101 et 102 peuvent être regroupés sous la forme d'un champ unique exprimant la date au plus tôt de l'arrivée du prochain datagramme. Ceci présente l'avantage de disposer de davantage de bits pour coder cette variable unique et par conséquent de permettre un codage plus précis.)
- un compte 103 de situations d'exception (rejet d'un datagramme par exemple) rencontrées par les datagrammes en transit dans le commutateur de paquets considéré et affecté au chemin virtuel concerné, ce compte de situations d'exception étant codé sur trois bits dans une troisième partie du champ de variables repérée par la lettre C,
- un bit drapeau 104 indiquant l'ajout ou non d'un port de sortie de test dans le profil de diffusion du chemin virtuel concerné, ce bit drapeau occupant une quatrième partie du champ de variables repérée par la lettre M, et
- un résidu 105 de code de détection et de correction d'erreur établi sur le premier mot binaire 100 à l'occasion de l'expédition du datagramme, ce résidu de code de détection étant codé sur sept bits dans une cinquième et dernière partie du champ de variables repérée par les lettres EDC.

Le premier 110 des trois mots binaires consacrés au champ de constantes renferme différentes constantes dont :
- un identifiant de format 111 indiquant si l'on est en présence d'un format standard où spécial, cet identifiant étant codé sur un bit et au niveau zéro pour le cas en cours de description du format standard, dans une première partie du mot binaire 110 repérée par le sigle A0,
- une valeur de priorité 112 donnant une échelle de priorité qui précise les importances relatives des chemins virtuels transitant par le commutateur de paquets considéré et sert à l'organisation des files d'attentes de datagrammes à réémettre situées au niveau des ports de sortie du commutateur de paquets considéré, cette valeur de priorité étant codée sur trois bits dans une deuxième partie du mot binaire 110 repérée par la lettre P,
- une valeur de bande passante maximale allouée 113 correspondant, par exemple, au nombre maximum admissible, par unité de temps, de datagrammes, supposés de longueur maximale, affectés au chemin virtuel considéré, cette valeur de bande passante maximale allouée étant codée sur trois bits dans une troisième partie du mot binaire 110 repérée par le sigle BAG,
- une valeur de gigue tolérée 114 correspondant à la gigue maximale admissible pour le chemin virtuel concerné, considéré au niveau du commutateur de paquets concerné, cette valeur maximale de gigue étant codée sur sept bits dans une quatrième partie du mot binaire 110 repérée par le terme anglo-saxon "BAG jitter",
- une longueur maximale tolérée 115 pour les datagrammes affectés au chemin virtuel considéré, cette longueur maximale de datagramme étant codée sur onze bits dans une cinquième partie du mot binaire 110 repérée par l'abbréviation anglosaxonne "Max. Length",
- un résidu d'un code de Hamming 116 verrouillant les données du mot binaire 110 en combinaison avec l'adresse du descripteur local de chemin virtuel considéré, ce résidu de code de Hamming étant codé sur quatre bits dans une sixième partie du mot binaire 110 repérée par le sigle HC1, et
- un résidu d'un code de détection et de correction d'erreur 117 appliqué aux six premières parties du mot binaire 110, ce résidu de code de détection et de correction d'erreur étant codé sur sept bits dans une septième partie du mot binaire 110 repérée par le sigle EDC.

Le deuxième 120 des trois mots binaires consacrés au champ de constantes renferme trois constantes :
- une première constante constituée du profil de réception 121 affecté, au niveau du commutateur de paquets considéré, au chemin virtuel concerné, ce profil de réception étant codé sur vingt-cinq bits dans une première partie du mot binaire 120 repérée par le terme anglo-saxon "Reception Profil",
- une deuxième constante constituée d'un résidu d'un code de Hamming 122 verrouillant les données du mot binaire 120, ce résidu de code de Hamming étant codé sur quatre bits dans une deuxième partie du mot binaire 120 repérée par le sigle HC1, et
- une troisième constante constituée d'un résidu d'un code de détection et de correction d'erreur 123 appliqué aux deux premières parties du mot binaire 120, ce résidu de code de détection et de correction d'erreur étant codé sur sept bits dans une troisième partie du mot binaire 120 repérée par le sigle EDC.

Le troisième et dernier 130 des trois mots binaires consacrés au champ de constantes renferme trois constantes :
- une première constante constituée du profil de diffusion 131 affecté, au niveau du commutateur de paquets considéré, au chemin virtuel concerné, ce profil de réception étant codé sur vingt-cinq bits dans une première partie du mot binaire 130 repérée par le terme anglo-saxon "Diffusion Profil",
- une deuxième constante constituée d'un résidu d'un code de Hamming 132 verrouillant les données du mot binaire 130 en combinaison avec l'adresse du descripteur local de chemin virtuel considéré, ce résidu de code de Hamming étant codé sur quatre bits dans une deuxième partie du mot binaire 130 repérée par le sigle HC2, et
- une troisième constante constituée d'un résidu d'un code de détection et de correction d'erreur 133 appliqué aux deux premières parties du mot binaire 130, ce résidu de code de détection et de correction d'erreur étant codé sur sept bits dans une troisième partie du mot binaire 130 repérée par le sigle EDC.

Comme on peut le voir sur la figure 4, un descripteur local de chemin virtuel au format spécial comporte, comme un descripteur local de chemin virtuel au format standard, un premier mot binaire 200 de trente-six bits constitué d'un champ de variables et trois mots binaires 210, 220 et 230 de trente-six bits constituant ensemble, un champ de constantes.

Son premier mot binaire 200 consacré au champ de variables ainsi que le premier 210 et le troisième 230 de ses trois mots binaires suivant consacrés au champ de constantes ont la même constitution que les mots binaires 100, 110, 140 qui leurs correspondent dans le format standard, à ceci près que l'identifiant de format 211 figurant en première partie du deuxième mot binaire 210 est au niveau un caractéristique du format spécial.

La différence essentielle entre format standard et format spécial, se situe au niveau du troisième mot binaire 220 qui voit la constante constituée par le profil de réception codé sur vingt-cinq bits remplacée par :
- une constante 221, dite "canal de réception", constituée d'un profil de réception réduit n'indiquant qu'un unique port d'entrée autorisé pour un datagramme affecté au chemin virtuel concerné, ce canal de réception étant codé sur cinq bits dans une première partie du mot binaire 220 repérée par le terme anglo-saxon "Receive Channel",
- quatre bits de bourrage 222, et
- une constante 223 dite "index d'adressage", constituée d'un index d'adressage pointant, dans la mémoire de consignes 60, sur le champ de variables (premier mot binaire) d'un autre descripteur local de chemin virtuel.

L'automate de routage utilise les résidus de code de Hamming et de code de détection d'erreur EDC à chacune de ses lectures, dans la mémoire de consignes, d'un ou plusieurs mots binaires d'un descripteur local pour s'assurer de l'intégrité des informations extraites avant de les utiliser, et les remet à jour chaque fois qu'il procède à une inscription dans la mémoire de consignes.

Lorsqu'il a à traiter un datagramme reçu sur un port d'entrée de son commutateur de paquets, l'automate de routage 50 commence par extraire des données de service du datagramme ou de la requête de routage concernant le datagramme, faite par le port d'entrée qui l'a reçu et qui a constaté son intégrité, l'identité du chemin virtuel auquel le datagramme a été affecté lors de son expédition. Une fois cette identité acquise, il s'en sert pour aller lire, dans la mémoire de consignes 60, les champs de variables et de constantes du descripteur local associé au chemin virtuel concerné. Puis il procède, à l'aide des variables et constantes lues, aux vérifications d'adéquation du datagramme aux caractéristiques du chemin virtuel auquel il est affecté pour rejeter le datagramme si les vérifications ne sont pas concluantes ou mettre à jour le champ de variables du descripteur local consulté et router le datagramme au sein du commutateur de paquets si les vérifications sont concluantes.

Pour vérifier l'adéquation d'un datagramme en transit dans son commutateur de paquets avec le chemin virtuel affecté à ce datagramme lors de son expédition, l'automate programmable 50, après avoir lu, dans la mémoire de consignes 60 de son commutateur de paquets, le descripteur local de chemin virtuel correspondant au chemin virtuel d'affectation du datagramme, procède à trois opérations différentes. Au cours de deux premières opérations, il vérifie l'appartenance du port d'entrée du commutateur de paquets ayant servi d'accès au datagramme au parcours du chemin virtuel d'affectation et le respect par le datagramme de la longueur maximale admise par son chemin virtuel d'affectation. Au cours de la troisième opération, il s'assure que la transmission du datagramme en transit jusqu'au commutateur de paquets n'a pas impliqué un dépassement du débit maximum autorisé, au niveau du commutateur de paquets, pour le chemin virtuel auquel le datagramme est affecté.

La vérification de l'appartenance, du port d'entrée ayant servi au datagramme pour pénétrer dans le commutateur de paquets, au parcours autorisé pour le chemin virtuel affecté au datagramme lors de son expédition au travers du réseau de transmission consiste, pour l'automate de routage, à s'assurer que ce port d'entrée est répertorié dans le profil de réception 121 du descripteur local lu si celui-ci est au format standard ou correspond au canal de réception 221 du descripteur local lu si celui-ci est au format spécial.

La vérification du respect par le datagramme en cours de routage dans le commutateur de paquets, de la longueur maximale admise par le chemin virtuel qui lui a été affecté consiste, pour l'automate de routage, à comparer la longueur effective du datagramme avec la consigne de longueur maximale 115 figurant dans le premier mot 110, 210 de champ de constantes du descripteur local lu.

La vérification de la fraîcheur du datagramme en cours de routage dans le commutateur de paquets consiste à apprécier le temps depuis lequel il séjourne dans le commutateur de paquets, par évaluation de l'intervalle de temps séparant la date courante de sa date de réception au niveau du port d'entrée par lequel il a accédé au commutateur de paquets et par comparaison de ce temps de séjour à un seuil au-delà duquel le datagramme est rejeté. Le seuil est fixé, comme la capacité de la mémoire tampon, lors du dimensionnement du réseau de transmission par paquets. Au niveau du commutateur de paquets, cette vérification de fraîcheur permet de s'assurer que le datagramme n'a pas subi, dans la mémoire tampon qui fonctionne en mémoires circulantes, un écrasement par des datagrammes plus récents.

La vérification du non dépassement, lors de l'accès du datagramme au commutateur de paquets, du débit maximum autorisé pour le chemin virtuel affecté au datagramme lors de son expédition, consiste, pour l'automate de routage, à déterminer l'intervalle de temps séparant le moment de réception du datagramme, de celui de la réception du datagramme qui l'a précédé immédiatement sur le même chemin virtuel, et à apprécier si cet intervalle de temps de séparation est compatible avec le débit maximum admis pour le chemin virtuel considéré, cela compte tenu d'une tolérance de gigue moyenne et de la gigue instantanée effectivement constatée. Alternativement, dans le cas où l'on a choisi de coder une seule variable (la date d'arrivée au plus tôt du prochain datagramme), il suffit de comparer la date courante avec la date stockée dans le champ variable correspondant pour déterminer l'acceptation ou le rejet du nouveau datagramme.

La détermination de l'intervalle de temps séparant le moment de réception, par le commutateur de paquets auquel appartient l'automate de routage, du datagramme en cours de routage, du moment de réception du datagramme qui l'a précédé, au niveau du même commutateur de paquets sur le même chemin virtuel, se fait en soustrayant la date de réception 101 du dernier datagramme figurant en tant que "Last Arrivai Date" dans le champ de variables 100, 200 du descripteur lu, de la date de réception du datagramme en cours de routage fournie par le port d'entrée ayant servi d'accès au datagramme.

Une consigne de bande passante maximale allouée "BAG" assignée à un chemin virtuel au niveau d'un commutateur de paquets et exprimée par un nombre maximum par unité de temps de datagrammes supposés de longueur maximale, est respectée dès que l'intervalle de temps moyen séparant, au niveau du commutateur de paquets considéré, deux datagrammes successifs transitant par le chemin virtuel concerné, est supérieur à son inverse.

L'intervalle de temps moyen séparant, au niveau d'un commutateur de paquets, deux datagrammes successifs transitant par un même chemin virtuel n'est pas directement accessible à la mesure en raison d'une possibilité de gigue qui peut affecter un débit régulier de datagrammes parcourant un chemin virtuel par suite de leurs traversées, au niveau des commutateurs de paquets, de files d'attente de réémission dont les importances fluctuent en fonction des débits instantanés d'autres chemins virtuels partageant les mêmes ports de sortie.

Cette gigue qui influe sur la valeur instantanée de l'intervalle de temps de séparation mais pas sur la valeur moyenne peut être prise en compte par un automate de routage de la manière suivante :

Il commence par calculer, à partir de la consigne de bande passante maximale allouée figurant en tant que "BAG" dans le champ de constantes du descripteur lu, un intervalle de temps minimum nominal d_{n min} de séparation que doivent respecter, en l'absence de gigue, deux datagrammes se suivant sur le chemin virtuel considéré. Il mesure ensuite l'intervalle de temps de séparation effectif existant entre les réceptions, au niveau de son commutateur de paquets, du datagramme en cours de routage et de celui qui l'a précédé immédiatement sur le même chemin virtuel. Puis vérifie, en fonction de l'historique et de la tolérance de gigue admise qui figure en tant que "BAG Jitter" dans le champ de constantes du descripteur lu, que la valeur effectivement mesurée de l'intervalle de temps de séparation permet de respecter à moyen terme, celle de l'intervalle de temps minimum nominal d_{n min} de séparation. Cette vérification consiste à comparer la date de réception du datagramme en cours de routage avec sa date de réception attendue en l'absence de gigue puis à additionner algébriquement les déphasages constatés sur les intervalles de temps de séparation des différents datagrammes ayant suivi précédemment le même chemin virtuel d'une manière algébrique, les déphasages en avance étant retranchés et ceux en retard étant ajoutés à un montant de crédit d'avance de phase établi en début, à la date de réception d'un datagramme pris pour référence, et à ne retenir un datagramme que si, lors de sa réception, la valeur instantanée de la somme algébrique des déphasages constatés, ne dépasse pas le pourcentage de gigue autorisé. La gestion de la somme algébrique des déphasages se fait au fur et à mesure de la réception de datagrammes sur le chemin virtuel concerné au moyen de la quantité 102 référencée "Account Value" du mot de variables 100 ou 200 d'un descripteur local qui représente à tout instant l'avance de phase maximale ou crédit d'avance de phase autorisé pour le prochain datagramme à venir. Ce crédit d'avance de phase est initialisé à son maximum permis par la gigue admise à la date de réception d'un datagramme pris pour référence puis débité de l'avance de phase constatée ou crédité du retard de phase constatée à la réception de chaque datagramme ultérieur, son passage en négatif traduisant un dépassement du débit maximum autorisé pour le chemin virtuel concerné et impliquant le rejet du datagramme concerné.

Les diagrammes des figures 5a à 5d illustrent le déroulement des opérations faites lors de cette vérification selon que le datagramme à router se présente en avance ou en retard sur sa date de réception attendue. Ces diagrammes se composent d'une paire d'axes temporels sur lesquels ont été reportées différentes durées mesurées à partir d'une position d'origine pᵣ qui est prise pour référence et qui correspond à la date de réception d'un datagramme reçu antérieurement et pris pour référence. Parmi ces durées, il y a :
- la durée d_{n min} de l'intervalle de temps minimum nominal de séparation qui conduit à la position p_{n min} correspondant à la date de réception attendue pour le prochain datagramme en l'absence de gigue,
- la limite inférieure minimum d_{l min} pour l'intervalle de temps de séparation effectif entre deux datagrammes successifs compte tenu de la tolérance de gigue, limite qui conduit à la position p_{l min},
- la limite inférieure d_{a min} appliquée effectivement à l'intervalle de temps de séparation mesuré entre le datagramme à router et celui qui l'a précédé sur le même chemin virtuel, limite conduisant à la position p_{a min} qui correspond à la date au plus tôt pour une arrivée licite du datagramme à router et qui peut être inscrite dans le mot de variable en lieu et place de la date de réception du dernier datagramme routé et du crédit d'avance de phase du datagramme en cours de routage, et
- la durée dₘ de l'intervalle de temps de séparation effectivement mesuré entre le datagramme à router et celui qui l'a immédiatement précédé sur le même chemin virtuel, durée qui conduit à la position pₘ.

Comme on l'a vu précédemment, la durée d_{n min} de l'intervalle de temps minimum nominal de séparation peut être prise égale à l'inverse de la consigne de bande passante maximale allouée "BAG" lorsque celle-ci est exprimée en un nombre maximum de datagrammes par unité de temps.

La limite inférieure minimum d_{l min} pour l'intervalle de temps de séparation effectif entre deux datagrammes successifs compte tenu de la tolérance de gigue est prise égale à la durée d_{n min} de l'intervalle de temps minimum de séparation diminuée du pourcentage de gigue admis figurant dans la consigne "BAG Jitter".

La limite inférieure d_{a min} appliquée effectivement à l'intervalle de temps de séparation mesuré entre le datagramme à router et celui qui l'a précédé sur le même chemin virtuel correspond au crédit d'avance de phase. Elle est déterminée à partir des dates de réception effectives des datagrammes. ayant précédé le datagramme à router sur le même chemin virtuel et obtenue à partir de durée d_{n min} de l'intervalle de temps minimum nominal de séparation complétée par la somme algébrique des écarts en plus (retard de phase) ou en moins (avance de phase) constatés sur les intervalles de temps de séparation des différents datagrammes ayant suivi le même chemin virtuel. Le crédit d'avance de phase est bornée de manière que la limite inférieure d_{a min} reste dans la plage [d_{l min}, d_{n min}] et initialisée à son maximum de manière qu'à chaque changement du datagramme de référence, la limite inférieure d_{a min} prenne la valeur de la limite inférieure minimum d_{l min}.

La vérification du non dépassement, lors de l'accès du datagramme au commutateur de paquets, du débit maximum autorisé pour le chemin virtuel affecté au datagramme lors de son expédition, consiste, pour l'automate de routage, après avoir mesuré l'intervalle de temps effectif séparant le moment de réception du datagramme, de celui de la réception du datagramme qui l'a précédé immédiatement sur le même chemin virtuel et déduit des informations contenues dans le descripteur local du chemin virtuel la valeur de la limite inférieure d_{a min}, à vérifier que l'intervalle de temps de séparation mesuré est plus grand que la valeur trouvée pour la limite inférieure d_{a min}, vérification qui revient à constater que le crédit d'avance de phase reste positif et, si c'est le cas, d'une part, mettre à jour la valeur de la limite inférieure d_{a min} ou, ce qui revient au même, du crédit d'avance de phase en introduisant dans son calcul le datagramme à router et, d'autre part, réaliser effectivement le routage du datagramme concerné, ou, si ce n'est pas le cas, rejeter le datagramme en cours de routage et prendre le prochain datagramme parvenant par le chemin virtuel concerné comme nouvel référence tout en réinitialisant la valeur de la limite inférieure d_{a min}.

Dans le cas de la figure 5a, le datagramme à router se présente à un instant pₘ, en avance sur la date de réception attendue p_{n min} mais dans les limites permises par la gigue tolérée car en retard sur la limite inférieure d_{a min}. Le premier axe temporel 300 illustre la situation avant la vérification du non dépassement, au cours de la réception du datagramme à router, du débit maximal autorisé pour son chemin virtuel et comporte une valeur d_{a min} de la limite inférieure effective pour l'intervalle de temps de séparation déterminée sans tenir compte du datagramme à router. Le deuxième axe temporel 310 illustre la situation après la vérification concluante du non dépassement, au cours de la réception du datagramme à router, du débit maximal autorisé pour son chemin virtuel et mise à jour de la valeur d_{a min} de la limite inférieure effective pour l'intervalle de temps de séparation, par prise en compte du datagramme en cours de routage. Comme le datagramme en cours de routage était en avance par rapport à la date de réception attendue, la valeur p_{a min} de la limite inférieure effective pour l'intervalle de temps de séparation a augmenté.

Dans le cas de la figure 5b, le datagramme à router se présente à un instant pₘ, en avance sur la date de réception attendue p_{n min}, en dehors des limites permises par la gigue tolérée car en avance sur la limite inférieure p_{a min}. il est donc rejeté. Le premier axe temporel 320 illustre la situation avant la vérification du non dépassement, au cours de la réception du datagramme à router, du débit maximal autorisé pour son chemin virtuel et comporte une valeur d_{a min} de la limite inférieure effective pour l'intervalle de temps de séparation déterminée sans tenir compte du datagramme à router. Le deuxième axe temporel 330 illustre la situation après la vérification non concluante du non dépassement, au cours de la réception du datagramme à router, du débit maximal autorisé pour son chemin virtuel, et la réception d'un nouveau datagramme pris pour référence. La valeur d_{a min} de la limite inférieure effective pour l'intervalle de temps de séparation est initialisée et portée au niveau de celle de la limite inférieure minimum d_{l min}.

Dans le cas de la figure 5c, le datagramme à router se présente à un instant pₘ, en retard sur la date de réception attendue p_{n min} mais dans les limites permises par la gigue tolérée. Le premier axe temporel 340 illustre la situation avant la vérification du non dépassement, au cours de la réception du datagramme à router, du débit maximal autorisé pour son chemin virtuel et comporte une valeur d_{a min} de la limite inférieure effective pour l'intervalle de temps de séparation déterminée sans tenir compte du datagramme à router. Le deuxième axe temporel 350 illustre la situation après la vérification concluante du non dépassement, au cours de la réception du datagramme à router, du débit maximal autorisé pour son chemin virtuel et mise à jour de la valeur d_{a min} de la limite inférieure effective pour l'intervalle de temps de séparation, par prise en compte du datagramme en cours de routage. Comme le datagramme en cours de routage était en retard par rapport à la date de réception attendue, la valeur d_{a min} de la limite inférieure effective pour l'intervalle de temps de séparation a diminué tout en restant supérieure à la valeur de la limite inférieure minimum d_{l min}.

Dans le cas de la figure 5d, le datagramme à router se présente à un instant pₘ, en retard sur la date de réception attendue d_{n min} au-delà des limites permises par la gigue tolérée. Le premier axe temporel 360 illustre la situation avant la vérification du non dépassement, au cours de la réception du datagramme à router, du débit maximal autorisé pour son chemin virtuel et comporte une valeur d_{a min} de la limite inférieure effective pour l'intervalle de temps de séparation déterminée sans tenir compte du datagramme à router. Le deuxième axe temporel 360 illustre la situation après une vérification concluante du non dépassement, au cours de la réception du datagramme à router, du débit maximal autorisé pour son chemin virtuel et mise à jour de la valeur d_{a min} de la limite inférieure effective pour l'intervalle de temps de séparation, par prise en compte du datagramme en cours de routage. Comme le datagramme en cours de routage était en retard par rapport à la date de réception attendue, la valeur d_{a min} de la limite inférieure effective pour l'intervalle de temps de séparation a diminué. Elle n'a cependant pas autant diminué qu'elle aurait dû car elle ne peut devenir inférieure à la valeur de la limite inférieure minimum d_{l min}.

Pour effectuer ses tâches, l'automate de routage a son temps de traitement partagé en une suite répétitive et invariante de fentes temporelles partagées entre les ports d'entrée du commutateur de paquets et l'automate de routage lui-même, et affectées à des tâches élémentaires spécifiques. La majorité de ces fentes temporelles servent aux vérifications d'intégrité et aux routages des différents datagrammes parvenant aux ports d'entrée du commutateur de paquets. Elles sont allouées individuellement aux différents ports d'entrée et, pour un même port d'entrée, à une tâche élémentaire spécifique correspondant à l'exécution d'un traitement logique combinatoire et/ou séquentiel particulier faite isolément ou en parallèle avec une opération de lecture ou d'écriture de données dans la mémoire de consignes. Les fentes temporelles restantes, qui sont en minorité, sont réservées à des tâches d'intendance ou de servitude, comme la programmation de la mémoire de consignes, la vérification de l'intégrité de ses données avec leurs corrections éventuels ou leurs mises à l'écart. Ces tâches d'intendance correspondent, comme les tâches élémentaires spécifiques à l'exécution d'un traitement logique combinatoire et/ou séquentiel particulier fait isolément ou en parallèle avec une opération de lecture ou d'écriture de données dans la mémoire de consignes.

La figure 6 donne un exemple d'une suite répétitive invariante de fentes temporelles pouvant être utilisée pour organiser, dans le cadre d'un commutateur de paquets présentant vingt-cinq ports d'entrée, l'activité d'un automate de routage capable de lire ou d'écrire dans la mémoire de consignes, en un coup d'horloge, un mot binaire de trente-six bits à la dimension des mots binaires composant les descripteurs locaux. Sur cette figure 6, les ports d'entrée d'affectation des fentes temporelles sont numérotés individuellement de zéro à vingt-cinq. La suite répétitive de fentes temporelles est supposée se dérouler sur 256 coups d'horloge énumérés dans les colonnes 400, 410, 420 et 430. Elle comporte, en regard de ces colonnes, des fentes temporelles consacrées à des opérations de lecture ou d'écriture dans la mémoire de consigne doublées en tâche de fond par des traitements de logique combinatoire et/ou logicielle, soit RFi, RVi, WVi pour les vérifications d'intégrité et les routages des datagrammes parvenant aux différents ports d'entrée du commutateur de paquets, soit RM1, WM1, RM2, WM2, RA et WA pour des vérifications et réparations de l'intégrité des descripteurs locaux stockés dans la mémoire de consignes, pour de la programmation ou pour de la maintenance ainsi que des fentes temporelles non référencées consacrées uniquement à l'exécution de traitements de logique combinatoire et/ou séquentielle.

L'automate de routage accède à la mémoire de routage lors :
- des fentes temporelles RFi qui sont affectées à la lecture, du champ de constantes du descripteur local de chemin virtuel correspondant au chemin virtuel annoncé par un datagramme reçu par le port d'entrée numéroté i. Chacune d'elles occupe trois coups d'horloge correspondant au temps nécessaire pour lire les trois mots binaires du champ de constantes d'un descripteur local.
- des fentes temporelles RVi qui sont affectées à la lecture du champ de variables du descripteur local du chemin virtuel annoncé par le datagramme reçu par le port d'entrée i. Chacune d'elles occupe un seul coup d'horloge puisqu'un champ de variable n'occupe qu'un seul mot binaire dans un descripteur local.
- des fentes temporelles WVi qui sont affectées à l'écriture, en vue d'une mise à jour, du champ de variables du descripteur local du chemin virtuel annoncé par le datagramme reçu par le port d'entrée i. Chacune d'elles occupe un seul coup d'horloge puisqu'un champ de variable n'occupe qu'un seul mot binaire dans un descripteur local.
- des fentes temporelles RA, RM1 et RM2 qui sont affectées à un accès en lecture d'un descripteur local complet. Elles occupent chacune quatre coups d'horloge puisqu'un descripteur local comporte trois mots binaires. et
- des fentes temporelles WA, WM1 et WM2 qui sont affectées à un accès en écriture d'un descripteur local complet. Elles occupent chacune quatre coups d'horloge, un coup d'horloge par mot binaire du descripteur local.

Le couplage en fond de tâche, de traitements de logique combinatoire et/ou séquentielle sur des données déjà acquises, avec les opérations de lecture et d'écriture dans la mémoire de consignes permet de réduire l'influence de la limitation du débit en écriture et en lecture de la mémoire de consigne sur l'exécution par l'automate de routage des différentes tâches qui lui sont confiées tandis que les fentes temporelles consacrées uniquement à des traitements de logique combinatoire et/ou séquentielle permettent de terminer les traitements de logique combinatoire et/ou séquentielle entamés au cours de fentes temporelles antérieures couplant traitements logiques et accès à la mémoire de consignes, lorsqu'ils prennent du retard sur les acquisitions et les restitutions de données à la mémoire de consignes.

Pour bénéficier des avantages de ce couplage, l'automate de routage opère sur deux datagrammes à la fois pris à des stades différents de traitement. En effet, les fentes temporelles RVi et WVi (avec 0<i<24) qui correspondent aux accès en lecture et écriture du champ de variables du descripteur local du chemin virtuel annoncé par un datagramme reçu sur le port d'entrée i et qui sont utilisées en fin de traitement, encadrent la fente temporelle RF(i+1) qui correspond à l'accès en lecture du champ de constantes du descripteur local du chemin virtuel annoncé par le datagramme reçu sur le port d'entrée i+1 et qui est utilisée en début de traitement.

Les fentes temporelles RFi, RVi et WVi encadrent la plage temporelle où s'effectuent le traitement d'un datagramme à router présenté par le port d'entrée numéroté i, c'est-à-dire, plus précisément, les vérifications de l'adéquation du datagramme aux consignes du chemin virtuel dont il se revendique et son routage.

Les plages temporelles délimitées par les fentes temporelles RM1 et WM1 ou, respectivement RM2 et WM2 sont réservées à des accès de programmation et de consultation utilisés, à la mise en route du commutateur de paquets, pour initialiser la mémoire de consigne puis, en cours de fonctionnement du commutateur de paquets, pour de la maintenance du réseau de commutation au niveau du commutateur de paquets concerné, notamment pour la gestion du bit drapeau 104 ajoutant ou non au profil de diffusion d'un chemin virtuel, un port de test permettant d'accéder au trafic du chemin virtuel par des instruments de mesure ou d'enregistrement.

Au cours des plages temporelles délimitées par les fentes temporelles RA et WA, l'automate de routage procède à une vérification de la commensurabilité de la date de réception de datagramme dite "Last Arrivai Time" figurant dans le champ de variable d'un descripteur local avec le temps courant pour éviter les ambiguïtés résultant du codage du temps qui se fait sur un horizon nécessairement limité. Cette vérification de commensurabilité consiste, pour chaque descripteur local analysé, à faire la différence entre la date de réception dite "Last Arrivai Time" et le temps courant et à s'assurer qu'elle reste inférieure à un seuil pris égal à une fraction limite de la dynamique de codage du temps. Tant que c'est le cas, les deux temps sont dits commensurables et la vérification s'arrête à ce stade. Dès que la différence se révèle supérieure au seuil, les deux codages de dates peuvent devenir rapidement incommensurables, en raison d'un risque de débordement du compteur de temps. Pour prévenir ce risque, un codage spécifique d'incommensurabilité est substitué à la date de réception de datagramme dite "Last Arrivai Time" et la somme algébrique des écarts dite "Account Value" est positionnée à sa valeur maximale. Le codage spécifique d'incommensurabilité est ensuite interprété par l'automate de routage comme une consigne de sélectionner le prochain datagramme reçu comme nouvelle référence pour la vérification du non dépassement du débit maximum autorisé pour le chemin virtuel.

La vérification de la commensurabilité de la date de réception de datagramme dite "Last Arrivai Time" figurant dans le champ de variables d'un descripteur local doit être faite suffisamment fréquemment pour garantir que chacun des descripteurs locaux de chemin virtuel stockés dans la mémoire de consignes est évalué au moins deux fois par tour du compteur de temps. Dans le cas où l'on utilise une variable unique pour coder la date d'arrivée au plus tôt du prochain datagramme, la détection d'incommensurabilité se fait lorsque la valeur absolue de la différence entre la date courante et la date stockée dans la variable devient supérieure à une valeur particulière choisie comme elle même supérieure à la contrainte de BAG la plus large augmentée de la gigue maximale. On choisira par exemple une valeur égale au quart de la dynamique de codage pour simplifier la réalisation. Il suffit en effet d'effectuer la soustraction des deux dates et de comparer les deux bits de poids fort du résultat obtenu. S'ils sont égaux les deux dates sont dites commensurables, s'ils sont opposés le temps codé dans la variable a cessé d'être commensurable avec le temps courant et doit donc être explicitement codé comme tel. Bien entendu, la tâche de détection de l'incommensurabilité doit évaluer chaque variable avec une période inférieure à la moitié de la dynamique de codage.

Outre cette vérification de commensurabilité, l'intervalle de temps délimité par les fentes temporelles RA et WA est aussi utilisé pour vérifier cycliquement l'intégrité de tous les descripteurs locaux stockés dans la mémoire de consignes, les corriger en cas d'erreur simple et les invalider en cas d'erreurs multiples. En effet, on met à profit le balayage, en lecture et écriture, des descripteurs locaux effectué pour la vérification de commensurabilité, pour vérifier la compatibilité de chacun des mots des descripteurs locaux avec le résidu de code de détection et de correction d'erreur EDC qu'il renferme. Normalement, le résidu recalculé doit correspondre au résidu mémorisé. S'il apparaît une différence, celle-ci permet, en raison des caractéristiques du code de détection et de correction d'erreur de situer une erreur isolée et de la corriger ou de signaler des erreurs multiples. En cas d'erreur isolée rectifiable, la fente temporelle WA concluant l'intervalle de temps de traitement permet de réinscrire une version corrigée du descripteur local dans la mémoire de consignes. En cas d'erreurs multiples dépassant les possibilités de correction du code EDC, la fente temporelle WA terminant l'intervalle de temps de traitement permet de réinscrire une version invalidée du descripteur local dans la mémoire de consignes. Cette version invalidée peut avoir diverses configurations pourvue qu'elle soit reconnaissable par l'automate de routage. Elle peut par exemple présenter un champ de constantes avec un ou tous ses mots binaires mis à un. Une valeur tout à un d'un mot binaire de descripteur local n'est pas forcément valide du point de vue du code de Hamming mais cela ne porte pas à conséquence car le rôle du code de Hamming est précisément d'invalider un descripteur local en cas de désaccord entre le résidu annoncé et celui recalculé.

## Revendications

1. Procédé de gestion de tâches pour un automate de routage (50) d'un commutateur de paquets (1) faisant partie d'un réseau sécurisé de transmission à commutation par paquets (20) et comportant plusieurs ports d'entrée (21, 22, 23) et plusieurs ports de sortie (21, 22, 23) servant d'accès à des trafics de données entrants et sortants empruntant des liaisons physiques de transmission raccordées extérieurement au commutateur de paquets (1), sous forme de signaux de transmission renfermant des datagrammes, lesdits datagrammes renfermant des données binaires de message et de données binaires de service contenant des consignes de routages permettant de définir pour chaque datagramme un chemin dit "virtuel" à suivre au sein du réseau de transmission par paquets pour parvenir à destination, ledit procédé de gestion de tâche étant **caractérisé en ce qu**'il consiste, d'une part, à pourvoir ledit automate de routage (50) d'une table, stockée en mémoire vive (60), de descripteurs locaux des chemins virtuels empruntant le commutateur de paquets considéré (1), un descripteur local affecté à un chemin virtuel donné contenant, un profil de diffusion (131) répertoriant les ports de sortie (21, 22, 23) du commutateur de paquets considéré (1) utilisés par le chemin virtuel concerné, un profil de réception (121) répertoriant les ports d'entrée (21, 22, 23) du commutateur de paquets (1) utilisables par le chemin virtuel concerné, des informations (113, 114, 115, 101, 102) sur des contraintes de forme et de débit imposées aux datagrammes empruntant le chemin virtuel concerné et des informations de chronologie permettant de déterminer la date au plus tôt pour une arrivée licite du prochain datagramme empruntant le chemin virtuel concerné, et, d'autre part, à partager le temps de traitement dudit automate de routage (50) en une suite répétitive de fentes temporelles dont certaines sont réparties entre les différents ports d'entrée(21, 22, 23), chacune étant affectée individuellement à un port d'entrée particulier (21, 22 ou 23) et affectée à des opérations faisant partie du traitement de routage des datagrammes reçus par son port d'entrée d'affectation, ce traitement consistant, pour un datagrame, à :
- lire, dans la mémoire vive (60), le descripteur local de chemin virtuel affecté au datagramme reçu, repéré dans la table des descripteurs locaux au moyen de données de service tirées du datagramme reçu,
- effectuer sur le datagramme des vérifications sécuritaires anticongestion prenant en compte sa date de réception par le commutateur de paquets (1), l'identitée du port d'entrée (21, 22 ou 23) lui ayant servi pour accéder au commutateur de paquets (1) et les informations contenues dans le descripteur local lu,
- soit, lorsque l'une des vérifications précédentes est négative, rejeter le datagramme en cours de traitement,
- soit, lorsque toutes les vérifications précédentes sont positives, mettre à jour les informations de chronologies (101, 102) permettant de déterminer la date au plus tôt pour une arrivée licite du prochain datagramme empruntant le chemin virtuel concerné et proposer le datagramme en cours de traitement aux ports de sortie (21, 22, 23) répertoriés dans le profil de diffusion du descripteur local lu, en vue de la réémission de ce datagramme par ces ports de sortie (21, 22, 23).

2. Procédé selon la revendication 1, **caractérisé en ce que** les vérifications sécuritaires anticongestion consistent à :
- vérifier l'appartenance du port d'entrée (21, 22 ou 23) ayant servi au datagramme en cours de traitement pour accéder au commutateur de paquets (1), au profil de réception (121) du descripteur local lu,
- vérifier que l'ancienneté de la date de réception du datagramme en cours de traitement par rapport à la date courante ne dépasse pas un certain seuil, et
- vérifier que la date de réception (101) du datagramme en cours de traitement entre dans les limites permises par le débit maximum autorisé pour le chemin virtuel correspondant au descripteur local lu, cela en tenant compte de la valeur de son crédit d'avance de phase (102),

3. Procédé selon la revendication 1, **caractérisé en ce que** les descripteurs locaux sont protégés par un code de détection et de correction d'erreurs permettant de détecter et corriger les erreurs simples, et de détecter les erreurs multiples et **en ce que** des fentes temporelles sont réservées dans le temps de traitement de l'automate de routage (50) pour des tâches de servitude dont une vérification périodique de l'intégrité des éléments de la table des descripteurs locaux stockée en mémoire vive (60), leur correction en cas d'erreurs simples et leur invalidation en cas d'erreurs multiples, l'invalidation d'un descripteur local consistant à lui donner une valeur spécifique repésentative de sa non-validité.

4. Procédé selon la revendication 3, **caractérisé en ce que** la tâche de servitude consacrée à la vérification de l'intégrité des éléments de la table des descripteurs locaux stockée en mémoire vive (60), inclut la détection des descripteurs locaux invalidés et leur réécriture à partir d'une mémoire d'archivage située dans le commutateur de paquets (1) considéré.

5. Procédé selon la revendication 3, **caractérisé en ce que** la tâche de servitude consacrée à la vérification de l'intégrité des éléments de la table des descripteurs locaux stockée en mémoire vive (60), inclut la détection des descripteurs locaux invalidés et leur réécriture à partir d'une mémoire d'archivage accessible à distance par le réseau de transmission par commutation de paquets (20).

6. Procédé selon la revendication 3, **caractérisé en ce que** la valeur spécifique représentative de non-validité pour un descripteur local de chemin virtuel est localisée au niveau du profil de diffusion (121) et correspond à un profil de diffusion vide.

7. Procédé selon la revendication 1, **caractérisé en ce que** les profils de diffusion figurant dans les descripteurs locaux de chemin virtuel sont figés à la conception du réseau de transmission à commutation par paquets à l'exception d'un bit (M) réservé à un éventuel port de sortie affecté à de la maintenance dont la valeur peut être modifiée par l'automate de routage (50).

8. Procédé selon la revendication 1, **caractérisé en ce que** les descripteurs locaux de chemins virtuels ont tous la même longueur.

9. Procédé selon la revendication 1, **caractérisé en ce qu'**un descripteur local de chemin virtuel se présentent sous des formats comportant quatre mots binaires successifs (100, 110, 120, 130) : un mot de variables (100) et trois mots de constantes (110, 120, 130).

10. Procédé selon la revendication 9, **caractérisé en ce que** des descripteurs locaux se présentent sous un format standard avec :
- un mot de variables (100) qui est réécrit à la fin de chaque routage de datagramme affecté au chemin virtuel concerné et qui renferme des variables relatives aux informations de chronologie (101, 102),
- un premier mot de constantes (110) qui renferme des spécifications (113, 114, 115) relatives au débit maximum et à la gigue maximale admise pour le chemin virtuel considéré au niveau du commutateur de paquets concerné (1), et à la longueur maximale autorisée pour le datagramme,
- un deuxième mot de constantes (120) qui renferme un profil de réception (121) répertoriant les ports d'entrée (21, 22, 23) du commutateur de paquets concerné (1), autorisés à recevoir un datagramme affecté au chemin virtuel considéré, et
- un troisième mot de constantes (130) qui renferme un profil de diffusion (131) répertoriant les ports de sortie (21, 22, 23) du commutateur de paquets (1) concerné devant réexpédier un datagramme affecté au chemin virtuel considéré.

11. Procédé selon la revendication 9, **caractérisé en ce que** des descripteurs locaux se présentent sous un format spécial avec :
- un mot de variables (100) qui est réécrit à la fin de chaque routage de datagramme affecté au chemin virtuel concerné et qui renferme des variables (101, 102) relatives aux informations de chronologie,
- un premier mot de constantes (110) qui renferme des spécifications (113, 114, 115) relatives au débit maximum et à la gigue maximale admise pour le chemin virtuel considéré au niveau du commutateur de paquets concerné (1), et à la longueur maximale autorisée pour le datagramme,
- un deuxième mot de constantes (120) qui renferme un profil de réception réduit à un seul port d'entrée (21, 22 ou 23) et, à la place laissée libre par la définition réduite du profil de réception, un index d'adressage permettant de pointer un mot de variables de datation commun à plusieurs chemins virtuels et
- un troisième mot de constantes (130) qui renferme un profil de diffusion (131) répertoriant les ports de sortie (21, 22, 23) du commutateur de paquets (1) concerné devant réexpédier un datagramme affecté au chemin virtuel considéré.

12. Procédé selon la revendication 10 ou la revendication 11, **caractérisé en ce que** le premier mot de variables (100), qui est réécrit à la fin de chaque routage de datagramme affecté au chemin virtuel concerné, renferme des variables relatives à la date de réception (112) du dernier datagramme routé parvenu au commutateur de paquets (1) considéré par le même chemin virtuel concerné et au crédit d'avance de phase (102) dont bénéficie le prochain datagramme à router

13. Procédé selon la revendication 10 ou la revendication 11, **caractérisé en ce que** le premier mot de variables (100), qui est réécrit à la fin de chaque routage de datagramme affecté au chemin virtuel concerné, renferme une variable relative à la date d'arrivée au plus tôt que doit respecter le prochain datagramme pour être routé.

14. Procédé selon la revendication 9, **caractérisé en ce que** tous les mots (100, 110, 120, 130, 200, 210, 220, 230) d'un descripteur local de chemin virtuel sont protégés par un code de détection et de correction d'erreur individuel (EDC).

15. Procédé selon la revendication 9, **caractérisé en ce que** tous les mots de constantes (110, 120, 130, 210, 220, 230) d'un descripteur local de chemin virtuel sont protégés individuellement contre les erreurs, en premier lieu par un code de Hamming (HC1, HC2, HC3) combinant leur adresse en mémoire vive (60) et leur contenu, et en deuxième lieu par un code de détection et de correction d'erreur (EDC).

16. Procédé selon la revendication 10 ou la revendication 11, **caractérisé en ce que** l'un (110, 210) des mots d'un descripteur local de chemin virtuel renferme un identificateur (111) du type de format concerné.

17. Procédé selon la revendication 1, **caractérisé en ce que** les descripteurs locaux de chemin virtuel renferme une information (103) de comptabilisation des situations de rejet.

18. Procédé selon la revendication 10 ou la revendication 11, **caractérisé en ce que** le mot de variables (100, 200) des descripteurs locaux de chemin virtuel renferme un drapeau (104) permettant d'ajouter ou non au profil de diffusion défini dans l'un des mots de constantes, un port de sortie affecté à des opérations de maintenance.

19. Procédé selon la revendication 1, **caractérisé en ce que** les descripteur locaux de chemin virtuel renferment une information de priorité relative (112).

20. Procédé selon la revendication 3 et la revendication 9, ,**caractérisé en ce que** la valeur spécifique représentative de non-validité pour un descripteur local de chemin virtuel est obtenue par une mise à un des trois mots de constantes (110, 120, 130, 210, 220, 230).

21. Procédé selon la revendication 10 ou la revendication 11, **caractérisé en ce que** la suite répétitive de fentes temporelles affectées aux différents ports d'entrée (21, 22, 23) au cours d'un cycle de traitement de l'automate de routage (50), comporte, pour un même port d'entrée, une fente temporelle (RFi) affectée aux accès en lecture des mots de constantes du descripteur local adressé et à la prise en compte des informations qu'ils contiennent, puis une fente temporelle (RVi) affectée à l'accès en lecture d'un mot de variables soit du descripteur local adressé (format standard), soit, d'un autre descripteur local repéré à l'aide d'un index d'adressage (format spécial), et, après exploitation des informations lues, une fente temporelle (WVi) de réécriture pour remise à jour, du mot de variable lu.

22. Procédé selon la revendication 21, **caractérisé en ce que** des fentes temporelles du cycle de traitement de l'automate de routage (50), affectées à des ports d'entrée (21, 22, 23) différents sont entremêlées.

23. Procédé selon la revendication 1, appliqué à un commutateur de paquets (1) pourvu d'une mémoire tampon centrale (30) balayée de manière cyclique en écriture, par un séquenceur d'adresses (40) la faisant fonctionner à la façon d'une pluralité de mémoires circulantes, une mémoire circulante par port d'entrée (21, 22, 23) affectée au trafic d'informations entrant par ce port, **caractérisé en ce que** le séquenceur d'adresses (40) fournit également la suite répétitive de fentes temporelles répartissant le temps de traitement de l'automate de routage entre les différents ports d'entrée (21, 22, 23) du commutateur de paquets (1), de sorte que le cycle de balayage de la mémoire tampon et la suite répétitive des fentes temporelles de répartition du temps de traitement de l'automate de routage soient synchronisés.

24. Procédé selon la revendication 1, **caractérisé en ce que** des fentes temporelles sont réservées dans le temps de traitement de l'automate de routage (50) pour des tâches de servitude dont une vérification cyclique de commensurabilité, avec le temps courant, des dates de réception de datagramme figurant dans les descripteurs locaux, ladite vérification consistant à faire la différence entre la date de réception considérée et le temps courant et à s'assurer que cette différence reste inférieure à un seuil pris égal à une fraction limite de la dynamique de codage du temps utilisée dans le commutateur de paquets (1) concerné, une détection d'incommensurabilité conduisant à une invalidation de la date de réception.

## Claims

1. Method of managing tasks for a routing automaton (50) of a packet switch (1) forming part of a secure packet-switching transmission network (20) and comprising several input ports (21, 22, 23) and several output ports (21, 22, 23) serving for acces to incoming and outgoing data traffic following physical transmission links connected externally to the packet switch (1), in the form of transmission signals containing datagrams, the said datagrams containing binary message data and binary service data containing routing instructions making it possible to define for each datagram a so-called "virtual" path to be followed within the transmission network by packets so as to reach their destination, the said task management method being **characterized in that** it consists, on the one hand, in providing the said routing automaton (50) with a table, stored in random access memory (60), with local descriptors of the virtual paths following the packet switch considered (1), a local descriptor assigned to a given virtual path containing, a broadcasting profile (131) listing the output ports (21, 22, 23) of the packet switch considered (1) that are used by the virtual path concerned, a reception profile (121) listing the input ports (21, 22, 23) of the packet switch (1) that are usable by the virtual path concerned, information (113, 114, 115, 101, 102) on shape and bit rate constraints imposed on the datagrams following the virtual path concerned and chronology information making it possible to determine the earliest date for a licit arrival of the next datagram following the virtual path concerned, and, on the other hand, in apportioning the processing time of the said routing automaton (50) as a repetitive series of time slots some of which are distributed between the various input ports (21, 22, 23), each being assigned individually to a particular input port (21, 22 or 23) and assigned to operations forming part of the processing for routing the datagrams received via its assignment input port, this processing consisting, for a datagrame, in:
- reading, in the random access memory (60), the virtual path local descriptor assigned to the datagram received, tagged in the local descriptors table by means of service data gleaned from the datagram received,
- performing anticongestion security checks on the datagram taking into account its date of receipt by the packet switch (1), the identity of the input port (21, 22 or 23) having served it for access to the packet switch (1) and the information contained in the local descriptor read,
- either, when one of the preceding checks is negative, rejecting the datagram undergoing processing,
- or, when all the preceding checks are positive, updating the chronology information (101, 102) making it possible to determine the earliest date for a licit arrival of the next datagram following the virtual path concerned and proposing the datagram undergoing processing to the output ports (21, 22, 23) listed in the broadcasting profile of the local descriptor read, with a view to the resending of this datagram by these output ports (21, 22, 23).

2. Method according to Claim 1, **characterized in that** the anticongestion security checks consist in:
- checking that the input port (21, 22 or 23) having served the datagram undergoing processing to access the packet switch (1) belongs to the reception profile (121) of the local descriptor read,
- checking that the date of receipt of the datagram undergoing processing is not prior to the current date by more than a certain threshold, and
- checking that the date of receipt (101) of the datagram undergoing processing enters within the limits allowed by the maximum bit rate authorized for the virtual path corresponding to the local descriptor read, doing so taking account of its phase advance credit (102).

3. Method according to Claim 1, **characterized in that** the local descriptors are protected by an error detection and correction code making it possible to detect and correct simple errors, and to detect multiple errors and **in that** time slots are reserved in the processing time of the routing automaton (50) for ancillary tasks including a periodic check of the integrity of the elements of the local descriptors table stored in random access memory (60), their correction in the event of simple errors and their invalidation in the event of multiple errors, the invalidation of a local descriptor consisting in giving it a specific value repesentative of its non-validity.

4. Method according to Claim 3, **characterized in that** the ancillary task devoted to the checking of the integrity of the elements of the local descriptors table stored in random access memory (60), includes the detection of the invalidated local descriptors and their rewriting on the basis of an archiving memory situated in the packet switch (1) considered.

5. Method according to Claim 3, **characterized in that** the ancillary task devoted to the checking of the integrity of the elements of the local descriptors table stored in random access memory (60), includes the detection of the invalidated local descriptors and their rewriting on the basis of an archiving memory accessible remotely by the packet-switching transmission network (20).

6. Method according to Claim 3, **characterized in that** the specific value representative of non-validity for a virtual path local descriptor is located in the broadcasting profile (121) and corresponds to an empty broadcasting profile.

7. Method according to Claim 1, **characterized in that** the broadcasting profiles appearing in the virtual path local descriptors are frozen at the design of the packet-switching transmission network with the exception of a bit (M) reserved for a possible output port assigned to maintenance whose value can be modified by the routing automaton (50).

8. Method according to Claim 1, **characterized in that** the virtual path local descriptors all have the same length.

9. Method according to Claim 1, **characterized in that** a virtual path local descriptor arises in formats comprising four successive binary words (100, 110, 120, 130): a word of variables (100) and three words of constants (110, 120, 130).

10. Method according to Claim 9, **characterized in that** local descriptors arise in a standard format with:
- a word of variables (100) which is rewritten at the end of each datagram routing assigned to the virtual path concerned and which contains variables relating to the chronology information (101, 102),
- a first word of constants (110) which contains specifications (113, 114, 115) relating to the maximum bit rate and to the maximum jitter allowed for the virtual path considered at the packet switch concerned (1), and to the maximum length authorized for the datagram,
- a second word of constants (120) which contains a reception profile (121) listing the input ports (21, 22, 23) of the packet switch concerned (1), authorized to receive a datagram assigned to the virtual path considered, and
- a third word of constants (130) which contains a broadcasting profile (131) listing the output ports (21, 22, 23) of the packet switch (1) concerned having to redispatch a datagram assigned to the virtual path considered.

11. Method according to Claim 9, **characterized in that** local descriptors arise in a special format with:
- a word of variables (100) which is rewritten at the end of each datagram routing assigned to the virtual path concerned and which contains variables (101, 102) relating to the chronology information,
- a first word of constants (110) which contains specifications (113, 114, 115) relating to the maximum bit rate and to the maximum jitter allowed for the virtual path considered at the packet switch concerned (1), and to the maximum length authorized for the datagram,
- a second word of constants (120) which contains a reception profile reduced to a single input port (21, 22 or 23) and, at the place left free by the reduced definition of the reception profile, an addressing index making it possible to point to a word of date-stamping variables that is common to several virtual paths and
- a third word of constants (130) which contains a broadcasting profile (131) listing the output ports (21, 22, 23) of the packet switch (1) concerned having to redispatch a datagram assigned to the virtual path considered.

12. Method according to Claim 10 or Claim 11, **characterized in that** the first word of variables (100), which is rewritten at the end of each datagram routing assigned to the virtual path concerned, contains variables relating to the date of receipt (112) of the last routed datagram reaching the packet switch (1) considered by the same virtual path concerned and to the phase advance credit (102) from which the next datagram to be routed benefits.

13. Method according to Claim 10 or Claim 11, **characterized in that** the first word of variables (100), which is rewritten at the end of each datagram routing assigned to the virtual path concerned, contains a variable relating to the earliest arrival date that the next datagram must comply with so as to be routed.

14. Method according to Claim 9, **characterized in that** all the words (100, 110, 120, 130, 200, 210, 220, 230) of a virtual path local descriptor are protected by an individual error detection and correction code (EDC).

15. Method according to Claim 9, **characterized in that** all the words of constants (110, 120, 130, 210, 220, 230) of a virtual path local descriptor are individually protected against errors, firstly by a Hamming code (HC1, HC2, HC3) combining their address in random access memory (60) and their content, and secondly by an error detection and correction code (EDC).

16. Method according to Claim 10 or Claim 11, **characterized in that** one (110, 210) of the words of a virtual path local descriptor contains an identifier (111) of the type of format concerned.

17. Method according to Claim 1, **characterized in that** the virtual path local descriptors contains information (103) for metering rejection situations.

18. Method according to Claim 10 or Claim 11, **characterized in that** the word of variables (100, 200) of the virtual path local descriptors contains a flag (104) making it possible to add or not to the broadcasting profile defined in one of the words of constants, an output port assigned to maintenance operations.

19. Method according to Claim 1, **characterized in that** the virtual path local descriptors contain relative priority information (112).

20. Method according to Claim 3 and Claim 9, **characterized in that** the specific value representative of non-validity for a virtual path local descriptor is obtained by setting the three words of constants (110, 120, 130, 210, 220, 230) to one.

21. Method according to Claim 10 or Claim 11, **characterized in that** the repetitive series of time slots assigned to the various input ports (21, 22, 23) in the course of a processing cycle of the routing automaton (50), comprises, for one and the same input port, a time slot (RFi) assigned to the read-accesses of the words of constants of the local descriptor addressed and to the consideration of the information that they contain, then a time slot (RVi) assigned to the read-access of a word of variables either of the local descriptor addressed (standard format), or, of another local descriptor tagged with the aid of an addressing index (special format), and, after utilization of the information read, a rewrite time slot (WVi) for updating the variable word read.

22. Method according to Claim 21, **characterized in that** time slots of the processing cycle of the routing automaton (50) that are assigned to different input ports (21, 22, 23) are intermingled.

23. Method according to Claim 1, applied to a packet switch (1) provided with a central buffer memory (30) scanned in a cyclic manner in write mode, by an address sequencer (40) causing it to operate in the manner of a plurality of circulating memories, one circulating memory per input port (21, 22, 23) assigned to the information traffic entering via this port, **characterized in that** the address sequencer (40) also provides the repetitive series of time slots distributing the processing time of the routing automaton between the various input ports (21, 22, 23) of the packet switch (1), so that the scan cycle of the buffer memory and the repetitive series of the time slots distributing the processing time of the routing automaton are synchronized.

24. Method according to Claim 1, **characterized in that** time slots are reserved in the processing time of the routing automaton (50) for ancillary tasks including a cyclic check of commensurability, with the current time, of the datagram receipt dates appearing in the local descriptors, the said check consisting in calculating the difference between the date of receipt considered and the current time and in ensuring that this difference remains less than a threshold taken equal to a limit fraction of the time-coding dynamic range used in the packet switch (1) concerned, a detection of incommensurability leading to an invalidation of the date of receipt.

## Patentansprüche

1. Taskverwaltungsverfahren für einen Routing-Automaten (50) eines Paketvermittlers (1), der Teil eines gesicherten Paketvermittlungs-Übertragungsnetzes (20) ist und mehrere Eingangsports (21, 22, 23) und mehrere Ausgangsports (21, 22, 23) aufweist, die als Zugriff auf eingehende und ausgehende Datenverkehre dienen, die über extern an den Paketvermittler (1) angeschlossene physikalische Übertragungsverbindungen in Form von Datagramme enthaltenden Übertragungssignalen gehen, wobei die Datagramme Mitteilungs-Binärdaten und Dienst-Binärdaten enthalten, die Routinganweisungen enthalten, die es ermöglichen, für jedes Datagramm einen so genannten "virtuellen" Pfad zu definieren, der innerhalb des Paketübertragungsnetzes verfolgt werden muss, um zum Ziel zu gelangen, wobei das Taskverwaltungsverfahren **dadurch gekennzeichnet ist, dass** es einerseits darin besteht, den Routing-Automaten (50) mit einer im Arbeitsspeicher (60) gespeicherten Tabelle von lokalen Deskriptoren der virtuellen Pfade zu versehen, die über den betrachteten Paketvermittler (1) gehen, wobei ein einem gegebenen virtuellen Pfad zugeteilter lokaler Deskriptor ein Diffusionsprofil (131), das die Ausgangsports (21, 22, 23) des betrachteten Paketvermittlers (1) verzeichnet, die vom betroffenen virtuellen Pfad verwendet werden, ein Eingangsprofil (121), das die Eingangsports (21, 22, 23) des Paketvermittlers (1) verzeichnet, die vom betroffenen virtuellen Pfad verwendbar sind, Informationen (113, 114, 115, 101, 102) über Form- und Durchsatzzwänge, die den Datagrammen auferlegt werden, die über den betroffenen virtuellen Pfad gehen, und Chronologie-Informationen enthält, die es ermöglichen, das frühstmögliche Datum für eine zulässige Ankunft des nächsten Datagramms zu bestimmen, das über den betroffenen virtuellen Pfad geht, und andererseits darin besteht, die Verarbeitungszeit des Routing-Automaten (50) in eine wiederholte Folge von Zeitschlitzen aufzuteilen, von denen bestimmte zwischen den verschiedenen Eingangsports (21, 22, 23) verteilt sind, wobei jeder Schlitz individuell einem besonderen Eingangsport (21, 22 oder 23) und Operationen zugeteilt ist, die Teil der Routing-Verarbeitung der über seinen Zuteilungs-Eingangsport empfangenen Datagramme ist, wobei diese Verarbeitung für ein Datagramm darin besteht:
- im Arbeitsspeicher (60) den lokalen Deskriptor des virtuellen Pfads zu lesen, der dem empfangenen Datagramm zugeteilt ist, der in der Tabelle der lokalen Deskriptoren mittels Dienstdaten ermittelt wird, die aus dem empfangenen Datagramm entnommen werden,
- im Datagramm stauverhindernde Sicherheitsüberprüfungen durchzuführen, die sein Empfangsdatum durch den Paketvermittler (1), die Identität des Eingangsports (21, 22 oder 23), der ihm dazu gedient hat, auf den Paketvermittler (1) zuzugreifen, und die im gelesenen lokalen Deskriptor enthalten Informationen berücksichtigen,
- entweder, wenn eine der vorhergehenden Überprüfungen negativ ist, das in Verarbeitung befindliche Datagramm zurückzuweisen,
- oder, wenn alle vorhergehenden Überprüfungen positiv sind, die Chronologie-Informationen (101, 102) zu aktualisieren, die es ermöglichen, das frühstmögliche Datum für eine zulässige Ankunft des nächsten Datagramms zu bestimmen, das über den betroffenen virtuellen Pfad geht, und das in Verarbeitung befindliche Datagramm den Ausgangsports (21, 22, 23), die im Diffusionsprofil des gelesenen lokalen Deskriptor verzeichnet sind, zur Wiederaussendung dieser Datagramme durch diese Ausgangsports (21, 22, 23) anzubieten.

2. Verfahren nach Anspruch 1, **dadurch gekennzeichnet, dass** die stauverhindernden Sicherheitsüberprüfungen darin bestehen:
- die Zugehörigkeit des Eingangsports (21, 22 oder 23), der dem in Verarbeitung befindlichen Datagramm für den Zugriff zum Paketvermittler (1) gedient hat, zum Empfangsprofil (121) des gelesenen lokalen Deskriptors zu überprüfen,
- zu überprüfen, dass das Alter des Empfangsdatums des in Verarbeitung befindlichen Datagramms bezüglich des laufenden Datums einen bestimmten Schwellwert nicht überschreitet, und
- zu überprüfen, dass das Empfangsdatum (101) des in Verarbeitung befindlichen Datagramms innerhalb der Grenzen liegt, die vom maximal genehmigten Durchsatz für den dem gelesenen lokalen Deskriptor entsprechenden virtuellen Pfad erlaubt werden, unter Berücksichtigung des Werts seines Phasenvoreilungsguthabens (102).

3. Verfahren nach Anspruch 1, **dadurch gekennzeichnet, dass** die lokalen Deskriptoren von einem Erfassungs- und Fehlerkorrekturcode geschützt werden, der es ermöglicht, die Einfachfehler zu erfassen und zu korrigieren und die Mehrfachfehler zu erfassen, und dass Zeitschlitze in der Verarbeitungszeit des Routing-Automaten (50) für Dienstbarkeits-Tasks reserviert sind, darunter eine periodische Überprüfung der Integrität der Elemente der Tabelle der lokalen Deskriptoren, die im Arbeitsspeicher (60) gespeichert ist, ihre Korrektur im Fall von Einfachfehlern und ihre Ungültigmachung im Fall von Mehrfachfehlern, wobei die Ungültigmachung eines lokalen Deskriptors darin besteht, ihm einen spezifischen Wert zu geben, der seiner Ungültigkeit entspricht.

4. Verfahren nach Anspruch 3, **dadurch gekennzeichnet, dass** die der Überprüfung der Integrität der Elemente der im Arbeitsspeicher (60) gespeicherten Tabelle der lokalen Deskriptoren gewidmete Dienstbarkeits-Task die Erfassung der ungültig gemachten lokalen Deskriptoren und ihr Überschreiben ausgehend von einem Archivierungsspeicher umfasst, der sich im betrachteten Paketvermittler (1) befindet.

5. Verfahren nach Anspruch 3, **dadurch gekennzeichnet, dass** die der Überprüfung der Integrität der Elemente der im Arbeitsspeicher (60) gespeicherten Tabelle der lokalen Deskriptoren gewidmete Dienstbarkeits-Task die Erfassung der ungültig gemachten lokalen Deskriptoren und ihr Überschreiben ausgehend von einem Archivierungsspeicher umfasst, der aus der Ferne über das Übertragungsnetz durch Paketvermittlung (20) zugänglich ist.

6. Verfahren nach Anspruch 3, **dadurch gekennzeichnet, dass** der repräsentative spezifische Ungültigkeitswert für einen lokalen Deskriptor eines virtuellen Pfads auf der Ebene des Diffusionsprofils (121) lokalisiert ist und einem leeren Diffusionsprofil entspricht.

7. Verfahren nach Anspruch 1, **dadurch gekennzeichnet, dass** die Diffusionsprofile, die in den lokalen Deskriptoren eines virtuellen Pfads vorhanden sind, bei der Gestaltung des Übertragungsnetzes mit Paketvermittlung mit Ausnahme eines Bits (M) fixiert werden, das für einen möglichen Ausgangsport reserviert ist, der der Wartung zugeteilt ist, dessen Wert vom Routing-Automaten (50) geändert werden kann.

8. Verfahren nach Anspruch 1, **dadurch gekennzeichnet, dass** die lokalen Deskriptoren virtueller Pfade alle die gleiche Länge haben.

9. Verfahren nach Anspruch 1, **dadurch gekennzeichnet, dass** ein lokaler Deskriptor eines virtuellen Pfads in Formaten vorliegt, die vier aufeinander folgende Binärworte (100, 110, 120, 130) enthalten: ein Wort von Variablen (100) und drei Wörter von Konstanten (110, 120, 130).

10. Verfahren nach Anspruch 9, **dadurch gekennzeichnet, dass** lokale Deskriptoren in einem Standardformat vorliegen, mit:
- einem Wort von Variablen (100), das am Ende jedes dem betroffenen virtuellen Pfad zugeteilten Datagramm-Routings überschrieben wird und das Variablen bezüglich der Chronologie-Informationen (101, 102) enthält,
- einem ersten Wort von Konstanten (110), das Spezifikationen (113, 114, 115) bezüglich des maximalen Durchsatzes und des maximal zugelassenen Jitters für den betrachteten virtuellen Pfad auf der Ebene des betroffenen Paketvermittlers (1) und der maximal genehmigten Länge für das Datagramm enthält,
- einem zweiten Wort von Konstanten (120), das ein Empfangsprofil (121) enthält, das die Eingangsports (21, 22, 23) des betroffenen Paketvermittlers (1) verzeichnet, die berechtigt sind, ein dem betrachteten virtuellen Pfad zugeteiltes Datagramm zu empfangen, und
- einem dritten Wort von Konstanten (130), das ein Diffusionsprofil (131) enthält, das die Ausgangsports (21, 22, 23) des betroffenen Paketvermittlers (1) verzeichnet, der ein dem betrachteten virtuellen Pfad zugeteiltes Datagramm weiter befördern soll.

11. Verfahren nach Anspruch 9, **dadurch gekennzeichnet, dass** lokale Deskriptoren in einem speziellen Format vorliegen, mit:
- einem Wort von Variablen (100), das am Ende jedes dem betroffenen virtuellen Pfad zugeteilten Datagramm-Routings überschrieben wird und das Variablen (101, 102) bezüglich der Chronologie-Informationen enthält,
- einem ersten Wort von Konstanten (110), das Spezifikationen (113, 114, 115) bezüglich des maximalen Durchsatzes und des maximal zugelassenen Jitters für den betrachteten virtuellen Pfad auf der Ebene des betroffenen Paketvermittlers (1) und der maximal genehmigten Länge für das Datagramm enthält,
- einem zweiten Wort von Konstanten (120), das ein auf einen einzigen Eingangsport (21, 22 oder 23) reduziertes Empfangsprofil und anstelle des von der reduzierten Definition des Empfangsprofils frei gelassenen Platzes einen Adressierungsindex enthält, der es ermöglicht, auf ein Wort von Datierungs-Variablen zu zeigen, das mehreren virtuellen Pfaden gemeinsam ist, und
- einem dritten Wort von Konstanten (130), das ein Diffusionsprofil (131) enthält, das die Ausgangsports (21, 22, 23) des betroffenen Paketvermittlers (1) verzeichnet, der ein dem betrachteten virtuellen Pfad zugeteiltes Datagramm weiter befördern soll.

12. Verfahren nach Anspruch 10 oder Anspruch 11, **dadurch gekennzeichnet, dass** das erste Wort von Variablen (100), das am Ende jedes dem betroffenen virtuellen Pfad zugeteilten Datagramm-Routings überschrieben wird, Variable bezüglich des Empfangsdatums (112) des letzten gerouteten Datagramms, das über den gleichen betroffenen virtuellen Pfad zum betrachteten Paketvermittler (1) gekommen ist, und bezüglich des Phasenvoreilungsguthabens (102) enthält, von dem das nächste zu routende Datagramm profitiert.

13. Verfahren nach Anspruch 10 oder Anspruch 11, **dadurch gekennzeichnet, dass** das erste Wort von Variablen (100), das am Ende jedes dem betroffenen virtuellen Pfad zugeteilten Datagramm-Routings überschrieben wird, eine Variable bezüglich des frühstmöglichen Ankunftsdatums enthält, die das nächste Datagramm beachten muss, um geroutet zu werden.

14. Verfahren nach Anspruch 9, **dadurch gekennzeichnet, dass** alle Wörter (100, 110, 120, 130, 200, 210, 220, 230) eines lokalen Deskriptors eines virtuellen Pfads durch einen individuellen Erfassungs- und Fehlerkorrekturcode (EDC) geschützt sind.

15. Verfahren nach Anspruch 9, **dadurch gekennzeichnet, dass** alle Wörter von Konstanten (110, 120, 130, 210, 220, 230) eines lokalen Deskriptors eines virtuellen Pfads einzeln vor Fehlern geschützt sind, als erstes durch einen Hamming-Code (HC1, HC2, HC3), der ihre Adresse im Arbeitsspeicher (60) und ihren Inhalt kombiniert, und zweitens durch einen Erfassungs- und Fehlerkorrekturcode (EDC).

16. Verfahren nach Anspruch 10 oder Anspruch 11, **dadurch gekennzeichnet, dass** eines (110, 210) der Wörter eines lokalen Deskriptors eines virtuellen Pfads einen Identifikator (111) des betroffenen Formattyps umfasst.

17. Verfahren nach Anspruch 1, **dadurch gekennzeichnet, dass** die lokalen Deskriptoren eines virtueller Pfads eine Registrierungsinformation (103) der Zurückweisungssituationen enthalten.

18. Verfahren nach Anspruch 10 oder Anspruch 11, **dadurch gekennzeichnet, dass** das Wort von Variablen (100, 200) der lokalen Deskriptoren eines virtuellen Pfads einen Marker (104) enthält, der es ermöglicht, dem in einem der Wörter von Konstanten definierten Diffusionsprofil einen Ausgangsport hinzuzufügen oder nicht, der Wartungsoperationen zugeteilt ist.

19. Verfahren nach Anspruch 1, **dadurch gekennzeichnet, dass** die lokalen Deskriptoren eines virtuellen Pfads eine relative Prioritätsinformation (112) enthalten.

20. Verfahren nach Anspruch 3 und Anspruch 9, **dadurch gekennzeichnet, dass** der für die Ungültigkeit repräsentative spezifische Wert für einen lokalen Deskriptor eines virtuellen Pfads durch eine Einsrückstellung der drei Wörter von Konstanten (110, 120, 130, 210, 220, 230) erhalten wird.

21. Verfahren nach Anspruch 10 oder Anspruch 11, **dadurch gekennzeichnet, dass** die wiederholte Folge von Zeitschlitzen, die den verschiedenen Eingangsports (21, 22, 23) während eines Verarbeitungszyklus des Routing-Automaten (50) zugeteilt werden, für den gleichen Eingangsport einen Zeitschlitz (RFi), der den Lesezugriffen auf die Wörter von Konstanten des adressierten lokalen Deskriptors und der Berücksichtigung der in ihnen enthaltenen Information zugeteilt ist, und dann einen Zeitschlitz (RVi), der dem Lesezugriff auf ein Wort von Variablen entweder des adressierten lokalen Deskriptors (Standardformat), oder eines anderen lokalen Deskriptors, der mit Hilfe eines Adressierungsindex (spezielles Format) ermittelt wird, zugeteilt ist, und nach Auswertung der gelesenen Informationen einen Zeitschlitz (WVi) des Überschreibens zur Aktualisierung des gelesenen Worts von Variablen aufweist.

22. Verfahren nach Anspruch 21, **dadurch gekennzeichnet, dass** Zeitschlitze des Verarbeitungszyklus des Routing-Automaten (50), die verschiedenen Eingangsports (21, 22, 23) zugeteilt sind, vermischt werden.

23. Verfahren nach Anspruch 1, angewendet an einen Paketvermittler (1), der mit einem zentralen Pufferspeicher (30) versehen ist, der zyklisch von einer Adressen-Ablaufsteuerung (40) schreibgetastet wird, die ihn nach Art mehrerer Umlaufspeicher arbeiten lässt, einem Umlaufspeicher pro Eingangsport (21, 22, 23), der dem durch diesen Port eingehenden Informationsverkehr zugeteilt ist, **dadurch gekennzeichnet, dass** die Adressen-Ablaufsteuerung (40) ebenfalls die wiederholte Folge von Zeitschlitzen liefert, die die Verarbeitungszeit des Routing-Automaten zwischen den verschiedenen Eingangsports (21, 22, 23) des Paketvermittlers (1) verteilt, so dass der Tastzyklus des Pufferspeichers und die wiederholte Folge der Zeitschlitze der Verteilung der Verarbeitungszeit des Routing-Automaten synchronisiert werden.

24. Verfahren nach Anspruch 1, **dadurch gekennzeichnet, dass** Zeitschlitze in der Verarbeitungszeit des Routing-Automaten (50) für Dienstbarkeits-Tasks reserviert sind, darunter eine zyklische Überprüfung der Kommensurabilität der Datagramm-Empfangsdaten, die sich in den lokalen Deskriptoren befinden, mit der laufenden Zeit, wobei die Überprüfung darin besteht, die Differenz zwischen dem betrachteten Empfangsdatum und der laufenden Zeit zu bilden und sich zu vergewissern, dass diese Differenz unter einem Schwellwert bleibt, der gleich einem Grenzbruchteil der Zeitcodierungsdynamik genommen wird, die im betreffenden Paketvermittler (1) verwendet wird, wobei eine Erfassung einer Inkommensurabilität zu einer Ungültigmachung des Empfangsdatums führt.
